(19)

Europäisches
Patentamt
European
Patent Office
Office européen
des brevets

(11) **EP 4 410 588 A1**

(12) **EUROPEAN PATENT APPLICATION**
published in accordance with Art. 153(4) EPC

(43) Date of publication:
**07.08.2024 Bulletin 2024/32**

(21) Application number: **22875997.3**

(22) Date of filing: **21.09.2022**

(51) International Patent Classification (IPC):
**B60L 15/20** *(2006.01)*

(52) Cooperative Patent Classification (CPC):
**B60L 15/20**

(86) International application number:
**PCT/JP2022/035238**

(87) International publication number:
**WO 2023/054130 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2021 JP 2021157624**

(71) Applicant: **DENSO CORPORATION**
**Kariya-city, Aichi 448-8661 (JP)**

(72) Inventors:
• **KAMIO, Shigeru**
**Kariya- city, Aichi 4488661 (JP)**

• **LIU, Haibo**
**Kariya- city, Aichi 4488661 (JP)**
• **KAWAI, Keisuke**
**Kariya- city, Aichi 4488661 (JP)**
• **TAKAGI, Tatsuya**
**Kariya- city, Aichi 4488661 (JP)**
• **AKAMA, Sadahiro**
**Kariya- city, Aichi 4488661 (JP)**
• **HORIHATA, Harumi**
**Kariya- city, Aichi 4488661 (JP)**
• **KUBOTA, Masaru**
**Kariya- city, Aichi 4488661 (JP)**
• **KUROYANAGI, Youichi**
**Kariya- city, Aichi 4488661 (JP)**

(74) Representative: **TBK**
**Bavariaring 4-6**
**80336 München (DE)**

(54) **MOVING BODY, CONTROL DEVICE, AND PROGRAM**

(57) This vehicle (10) comprises a first dynamo-electric machine (210) that imparts torque to a first drive wheel (21), a second dynamo-electric machine (220) that applies torque to a second drive wheel (22), a rotation speed sensor (212) that acquires a first rotation speed of the first drive wheel (21), a rotation speed sensor (222) that acquires a second rotation speed of the second drive wheel 22, and a control device (100). The control device (100) includes a basic setting unit (110) that sets a basic rotation speed, a differential setting unit (120) that sets a differential rotation speed, and an action control unit (130) that controls the operation of the first dynamo-electric machine (210) and the second dynamo-electric machine (220) so that an average value of the first rotation speed and the second rotation speed becomes the basic rotation speed, and a difference between the first rotation speed and the second rotation speed reaches the differential rotation speed.

EP 4 410 588 A1

# FIG.1

10

210 220

211 INV INV 221
21 22
212 222

CONTROL DEVICE 100

11

$Y_b$

G

70 OPERATION
UNIT

YAW RATE
SENSOR 60

$\theta_1$ $\theta_2$

32
311 321
31

31

51 41 42 52 32

FRONT

LEFT RIGHT

REAR

# Description

[Cross Reference to Related Applications]

This application claims the benefit of the priority to Japanese Patent Application No. 2021-157624 filed September 28, 2021, the entire contents of which are incorporated herein by reference.

[Technical Field]

The present disclosure relates to a moving body, a control device, and a program.

[Background Art]

As described in PTL 1 below, a moving body such as an electric vehicle includes a dynamo-electric machine for generating a driving force, a braking device for decelerating and stopping the moving body, and a steering device for turning the moving body. As a result of the respective devices, the operations of "traveling", "stopping", and "turning" are achieved.

[Citation List]

[Patent Literature]

PTL 1: JP 2006-341656 A

[Summary of the Invention]

The inventors have proceeded with investigations toward realizing a moving body that is used for specific purposes, such as short-distance movement in urban areas, and for realizing a moving body referred to as a "slow mobility vehicle", which is only capable of low-speed travel, using a more simplified configuration. When the configuration is simplified, a reduction in the size and cost of the moving body can be achieved. Further, because it is no longer necessary to perform complicated controls for achieving the operations of "traveling", "stopping", and "turning", it is also possible to improve the robustness of the control.

The present disclosure has an object of providing a moving body having a simplified structure that is capable of improving the robustness of control, a control device of the moving body, and a program for causing the control device to operate.

A moving body according to the present disclosure includes: a first drive wheel disposed on a left side; a first dynamo-electric machine that imparts torque to the first drive wheel; a second drive wheel disposed on a right side; a second dynamo-electric machine that imparts torque to the second drive wheel; driven wheels that rotate due to a reaction force from a road surface, and which change a steering angle due to a reaction force from a road surface; a first rotation speed acquisition unit that acquires a first rotation speed, being the number of rotations the first drive wheel makes per unit time; a second rotation speed acquisition unit that acquires a second rotation speed, being the number of rotations the second drive wheel makes per unit time; and a control device that controls an operation of the first dynamo-electric machine and the second dynamo-electric machine. The control device includes: a basic setting unit that sets a basic rotation speed, being a target value for an average value of the first rotation speed and the second rotation speed; a differential setting unit that sets a differential rotation speed, being a target value for a difference between the first rotation speed and the second rotation speed; and an action control unit that controls an operation of the first dynamo-electric machine and the second dynamo-electric machine such that an average value of the first rotation speed and the second rotation speed becomes the basic rotation speed, and a difference between the first rotation speed and the second rotation speed becomes the differential rotation speed.

In the moving body of the configuration described above, the operations of "traveling", "stopping", and "turning" are achieved by operation of the first dynamo-electric machine and the second dynamo-electric machine, which are arranged on the left and right and individually operate. Because it is not necessary to separately provide a braking device or a steering device, the structure of the moving body can be made simpler than a conventional structure. Furthermore, by setting and using each of the basic rotation speed and the differential rotation speed in the control, it is possible to stably perform a "turning" operation that includes traveling straight ahead.

[Brief Description of the Drawings]

   Fig. 1 is a diagram schematically showing a configuration of a vehicle according to a first embodiment.
   Fig. 2 is a diagram schematically showing a configuration of a driven wheel that is provided in the vehicle according to the first embodiment.
   Fig. 3 is a diagram schematically showing a configuration of an operation unit that is provided in the vehicle according to the first embodiment.
   Fig. 4 is a diagram schematically showing the configuration of a control device according to the first embodiment.
   Fig. 5 is a diagram showing the configuration of the control device according to the first embodiment as a block diagram.
   Fig. 6 is a flowchart showing a processing flow that is executed by the control device according to the first embodiment.
   Fig. 7 is a diagram showing a map that is used to set a basic rotation speed.
   Fig. 8 is a flowchart showing a processing flow that is executed by the control device according to the first embodiment.

Fig. 9 is a diagram for describing the limitations on the amount of change in the basic rotation speed.

Fig. 10 is a flowchart showing a processing flow that is executed by the control device according to the first embodiment.

Fig. 11 is a diagram showing a map that is used to set a differential rotation speed.

Fig. 12 is a diagram showing a map that is used to set a target yaw rate.

Fig. 13 is a diagram showing a map that is used to set a differential rotation speed.

Fig. 14 is a diagram showing a map that is used to set a target steering angle.

Fig. 15 is a flowchart showing a processing flow that is executed by the control device according to the first embodiment.

Fig. 16 is a flowchart showing a processing flow that is executed by the control device according to the first embodiment.

Fig. 17 is a time chart showing the change of each parameter over time while the moving body is being controlled.

Fig. 18 is a time chart showing the change of each parameter over time while the moving body is being controlled.

Fig. 19 is a time chart showing the change of each parameter over time while the moving body is being controlled.

Fig. 20 is a diagram showing the configuration of a control device according to a second embodiment as a block diagram.

Fig. 21 is a diagram showing the configuration of a control device according to a third embodiment as a block diagram.

[Description of the Embodiments]

Hereinafter, the embodiments will be described with reference to the attached drawings. In order to allow the description to be easily understood, the same reference signs are given to the extent possible to the same components in each drawing, and duplicate descriptions will be omitted.

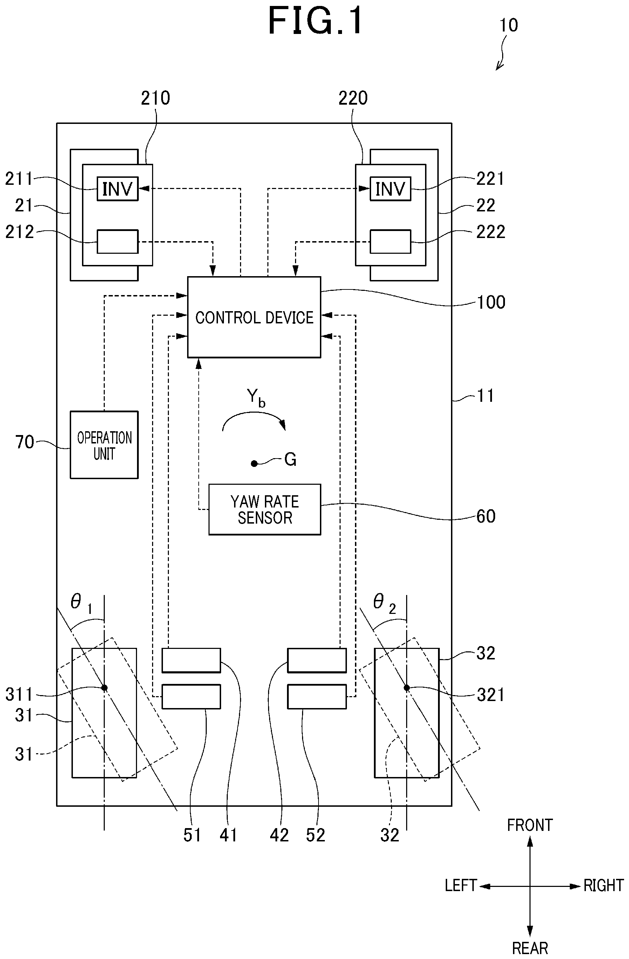

The vehicle 10 shown in Fig. 1 is a moving body according to the present embodiment, and is configured as an electric vehicle that travels according to driving operations performed by a passenger. The vehicle 10 is a moving body that is used for a specific purpose, such as short-distance movement in urban areas, and is also referred to as a "slow mobility vehicle", which is only capable of low-speed travel. The travel speed that can be achieved by the vehicle 10 is a predetermined speed or less, and is limited to, for example, 20 km/h or less or 50 km/h or less. The vehicle 10 is a four-wheeled vehicle including a first drive wheel 21 and a second drive wheel 22, which are drive wheels, and a first driven wheel 31 and a second driven wheel 32, which are driven wheels. Note that the number of wheels provided in the vehicle 10 may be different from this. For example, a three-wheeled vehicle is also possible in which only a single driven wheel is provided in the center along a left-right direction of the vehicle 10. Furthermore, although the vehicle 10 may be configured as a front wheel-drive vehicle as in the present embodiment, it may also be configured as a rear wheel-drive vehicle.

The first drive wheel 21 is a wheel that is arranged in a position that is on the front left side of the vehicle 10. The wheel of the first drive wheel 21 has a first dynamo-electric machine 210, which is an in-wheel motor, embedded therein. The first dynamo-electric machine 210 is a dynamo-electric machine for imparting torque to the first drive wheel 21, which is one of the drive wheels. The "torque" referred to here may include either or both of driving torque and braking torque.

The first dynamo-electric machine 210 generates torque using three-phase AC power supplied from a first inverter 211, and applies the torque to the first drive wheel 21. The first inverter 211 is a power converter for converting DC power supplied from a battery (not shown) into three-phase AC power, and supplying the power to the first dynamo-electric machine 210. When the vehicle 10 is braking, the first inverter 211 is also capable of converting the regenerative power generated in the first dynamo-electric machine 210 into DC power, and supplying the DC power to the battery. In this way, the first inverter 211 is configured as a bidirectional power converter. Although the first inverter 211 of the present embodiment is built into the first dynamo-electric machine 210, and is embedded in the wheel of the first drive wheel 21 with the first dynamo-electric machine 210, it may be provided in a different position. The operation of the first inverter 211 is controlled by a control device 100 described later.

The vehicle 10 is provided with a rotation speed sensor 212 for acquiring the number of rotations the first drive wheel 21 makes per unit time, that is, the rotational velocity of the first drive wheel 21. Although the rotation speed sensor 212 of the present embodiment is provided in the wheel of the first drive wheel 21 with the first inverter 211 and the like, it may be provided in a different position. The "number of rotations per unit time" is sometimes simply referred to as the "rotation speed" below. A signal representing the rotation speed of the first drive wheel 21 acquired by the rotation speed sensor 212 is input to the control device 100. The rotation speed of the first drive wheel 21 acquired by the rotation speed sensor 212 is also referred to as a "first rotation speed $R_{b1}$" below. The rotation speed sensor 212 corresponds to a "first rotation speed acquisition unit" according to the present embodiment.

The second drive wheel 22 is a wheel that is arranged in a position that is on the front right side of the vehicle 10. The wheel of the second drive wheel 22 has a second dynamo-electric machine 220, which is an in-wheel motor, embedded therein. The second dynamo-electric machine 220 is a dynamo-electric machine for imparting torque to the second drive wheel 22, which is the other drive wheel. The "torque" referred to here includes both driving torque and braking torque.

The second dynamo-electric machine 220 generates torque using three-phase AC power supplied from a second inverter 221, and applies the torque to the second drive wheel 22. The second inverter 221 is a power converter for converting DC power supplied from a battery (not shown) into three-phase AC power, and supplying the power to the second dynamo-electric machine 220. When the vehicle 10 is braking, the second inverter 221 is also capable of converting the regenerative power generated in the second dynamo-electric machine 220 into DC power, and supplying the DC power to the battery. In this way, the second inverter 221 is configured as a bidirectional power converter. Although the second inverter 221 of the present embodiment is built into the second dynamo-electric machine 220, and is embedded in the wheel of the second drive wheel 22 with the second dynamo-electric machine 220, it may be provided in a different position. The operation of the second inverter 221 is controlled by the control device 100.

The vehicle 10 is provided with a rotation speed sensor 222 for acquiring the rotation speed of the second drive wheel 22, that is, the rotational velocity of the second drive wheel 22. Although the rotation speed sensor 222 of the present embodiment is provided in the wheel of the second drive wheel 22 with the second inverter 221 and the like, it may be provided in a different position. A signal representing the rotation speed of the second drive wheel 22 acquired by the rotation speed sensor 222 is input to the control device 100. The rotation speed of the second drive wheel 22 acquired by the rotation speed sensor 222 is also referred to as a "second rotation speed $R_{b2}$" below. The rotation speed sensor 222 corresponds to a "second rotation speed acquisition unit" according to the present embodiment.

The first driven wheel 31 is a wheel that is arranged in a position that is on the rear left side of the vehicle 10. The second driven wheel 32 is a wheel that is arranged in a position that is on the rear right side of the vehicle 10. These wheels are provided as driven wheels that rotate due to a reaction force from the road surface rather than the torque from a dynamo-electric machine. The first driven wheel 31 and the second driven wheel 32 are configured as so-called "turning casters", whose steering angle changes due to the reaction force from the road surface.

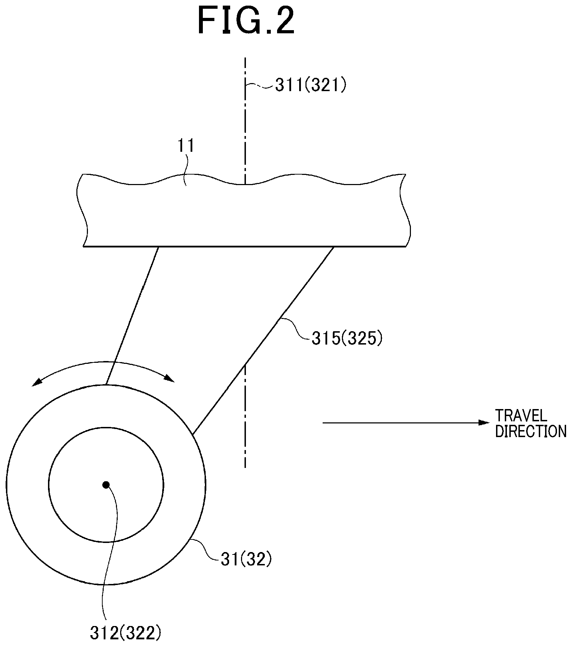

In Fig. 2, the configuration of the first driven wheel 31 and the vicinity thereof is schematically shown as a side view. The first driven wheel 31 is supported by a support body 315 in a freely rotatable state around a rotating shaft 312 shown in Fig. 2. The rotating shaft 312 is a shaft that is parallel to the road surface, and the orientation with respect to the support body 315 is fixed. The support body 315 is a member that is attached to a body 11 of the vehicle 10, and is attached in a freely rotatable state around a rotating shaft 311 shown in Fig. 2. The rotating shaft 311 is a shaft that is perpendicular to the road surface. When the support body 315 rotates around the rotating shaft 311, the orientation of the rotating shaft 312 mentioned above changes accordingly.

The second driven wheel 32 includes a support body 325, a rotating shaft 321, and a rotating shaft 322 as elements that respectively correspond to the support body 315, the rotating shaft 311, and the rotating shaft 312 provided in the first driven wheel 31. Because the configuration of the second driven wheel 32 is the same as the configuration of the first driven wheel 31 described above, description of the specific configuration **will be omitted.**

The steering angle $\theta_1$ shown in Fig. 1 is the angle formed by the first driven wheel 31 with respect to the front-rear direction of the vehicle 10. The steering angle $\theta_1$ changes when the orientation of the first driven wheel 31 changes around the rotating shaft 311. A rotation speed sensor 41 and a steering angle sensor 51 are provided near the first driven wheel 31. The rotation speed sensor 41 is a sensor for measuring the rotation speed of the first driven wheel 31. The steering angle sensor 51 is a sensor for measuring the steering angle $\theta_1$ of the first driven wheel 31. A signal representing the rotation speed of the first driven wheel 31 measured by the rotation speed sensor 41, and a signal representing the steering angle $\theta_1$ of the first driven wheel 31 measured by the steering angle sensor 51 are both input to the control device 100.

The steering angle $\theta_2$ shown in Fig. 1 is the angle formed by the second driven wheel 32 with respect to the front-rear direction of the vehicle 10. The steering angle $\theta_2$ changes when the orientation of the second driven wheel 32 changes around the rotating shaft 321. A rotation speed sensor 42 and a steering angle sensor 52 are provided near the **first driven wheel 31.** The rotation speed sensor 42 is a sensor for measuring the rotation speed of the second driven wheel 32. The steering angle sensor 52 is a sensor for measuring the steering angle $\theta_2$ of the second driven wheel 32. A signal representing the rotation speed of the second driven wheel 32 measured by the rotation speed sensor 42, and a signal representing the steering angle $\theta_2$ of the second driven wheel 32 measured by the steering angle sensor 52 are both input to the control device 100.

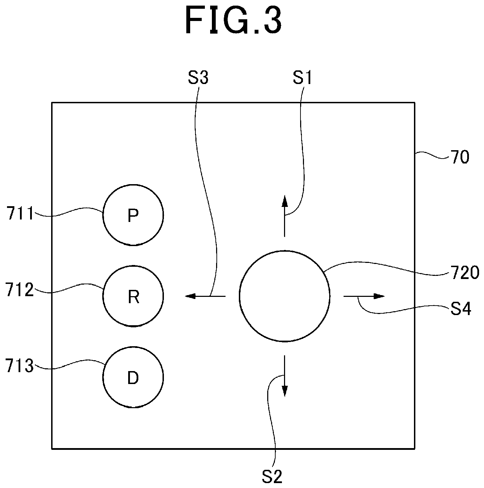

The vehicle 10 is provided with an operation unit 70. The operation unit 70 is a part in which driving operations are performed by a user of the vehicle 10. Note that, in the present embodiment, the "user" mentioned above refers to a passenger of the vehicle 10, but the "user" may be a person other than a passenger. For example, the "user" mentioned above may be a person that remotely operates the vehicle 10 from the outside, an automatic driving device, or the like. In such cases, the operation unit 70 has signals representing an accelerator operation amount and a steering operation amount of the vehicle 10, a signal setting a shift range, and the like, input from the outside by wireless communication and the like. As shown in Fig. 3, the operation unit 70 of the present embodiment is provided with a P switch 711, an R switch 712, a D switch 713, and a lever 720.

The P switch 711, the R switch 712, and the D switch 713 are each configured as pushbutton switches. The pressed state of each of the P switch 711, the R switch 712, and the D switch 713 is transmitted to the control device 100. When the passenger presses the P switch 711 for a certain time (for example, 1 second), the control device 100 switches a shift range of the vehicle 10 to P. P represents the parking position. As a result, the vehicle 10 is placed in a stopped state. When the passenger presses the R switch 712 for a certain time (for example, 1 second), the control device 100 switches the shift range of the vehicle 10 to R. R represents the reverse position. As a result, the vehicle 10 is in a state in which it is capable of moving backward according to an operation of the lever 720. When the passenger presses the D switch 713 for a certain time (for example, 1 second), the control device 100 switches the shift range of the vehicle 10 to D. D represents the drive position. As a result, the vehicle 10 is in a state in which it is capable of moving forward according to an operation of the lever 720.

The lever 720 is a so-called "joystick" operation lever. The magnitude and orientation of the angle at which the lever 720 is tilted is transmitted to the control device 100. The magnitude of the angle at which the lever 720 is tilted is also referred to as an "operation amount" below.

When the lever 720 is operated so as to be tilted in an S1 direction on a front side, the control device 100 causes the vehicle 10 to accelerate. When the lever 720 is operated so as to be tilted in an S2 direction on a rear side, the control device 100 causes the vehicle 10 to decelerate. In this way, the lever 720 functions as a part with which the passenger performs acceleration operations and deceleration operations. The angle at which the lever 720 is tilted in the front-rear direction is specifically referred to as an "accelerator operation amount" below. The accelerator operation amount is positive when the lever 720 is tilted to the front side, and is negative when tilted to the rear side.

When the lever 720 is operated so as to be tilted in an S3 direction on a left side, the control device 100 causes the vehicle 10 to turn toward a left direction. When the lever 720 is operated so as to be tilted in an S4 direction on a right side, the control device 100 causes the vehicle to turn toward a right direction 10. In this way, the lever 720 functions as a part with which the passenger performs steering operations so as to change the turning direction of the vehicle 10. The operation amount when the lever 720 is tilted to the left or right is specifically referred to as a "steering operation amount". The steering operation amount is positive when the lever 720 is tilted to the right side, and is negative when tilted to the left side.

Note that the lever 720 is configured such that the passenger can perform operations so as to tilt the lever 720 in not only the four directions S1, S2, S3 and S4 in Fig. 3, but in any direction within 360 degrees. For example, when the lever 720 is tilted in a direction that is on the front right side, the control device 100 causes the vehicle 10 to turn toward the right side while accelerating.

In the present embodiment, of the four wheels that are provided in the vehicle 10, the steering angle of only the first driven wheel 31 and the second driven wheel 32 provided on the rear side can be changed. The steering angle of each of the first drive wheel 21 and the second drive wheel 22 provided on the front side is fixed.

As mentioned above, the steering angle of each of the first driven wheel 31 and the second driven wheel 32 changes according to the reaction force from the road surface. In the vehicle 10, a steering wheel device that directly changes the steering angles $\theta_1$ and $\theta_2$ in Fig. 1 is not provided. The turning operations of the vehicle 10 are realized by generating a difference between the rotation speed of the first drive wheel 21 and the rotation speed of the second drive wheel 22.

Furthermore, a braking device that applies direct braking to the four wheels is not provided in the vehicle 10. The braking operations of the vehicle 10 are realized by the torque of the first dynamo-electric machine 210 and the second dynamo-electric machine 220.

In this way, in the vehicle 10, the operation of the first dynamo-electric machine 210 and the second dynamo-electric machine 220 is used to not only perform the travel of the vehicle 10, but also the braking operations and turning operations of the vehicle 10. By eliminating the need to separately provide a steering device and a braking device, and by simplifying the structure, it is possible to achieve a reduction in both the size and cost of the vehicle 10. The specific content of the control performed by the control device 100 to realize the turning of the vehicle 10 and the like will be described later.

As an additional configuration, the vehicle 10 is provided with a yaw rate sensor 60. The yaw rate sensor 60 is a sensor for measuring a yaw rate $Y_b$ of the vehicle 10. The yaw rate $Y_b$ is equivalent to a generally defined yaw rate, and refers to the rotational angular velocity of the vehicle 10 about a vertical axis passing through the center of gravity G of the vehicle 10. A signal representing the yaw rate $Y_b$ that has been measured by the yaw rate sensor 60 is input to the control device 100. The yaw rate $Y_b$ is positive when the vehicle 10 turns toward the right direction.

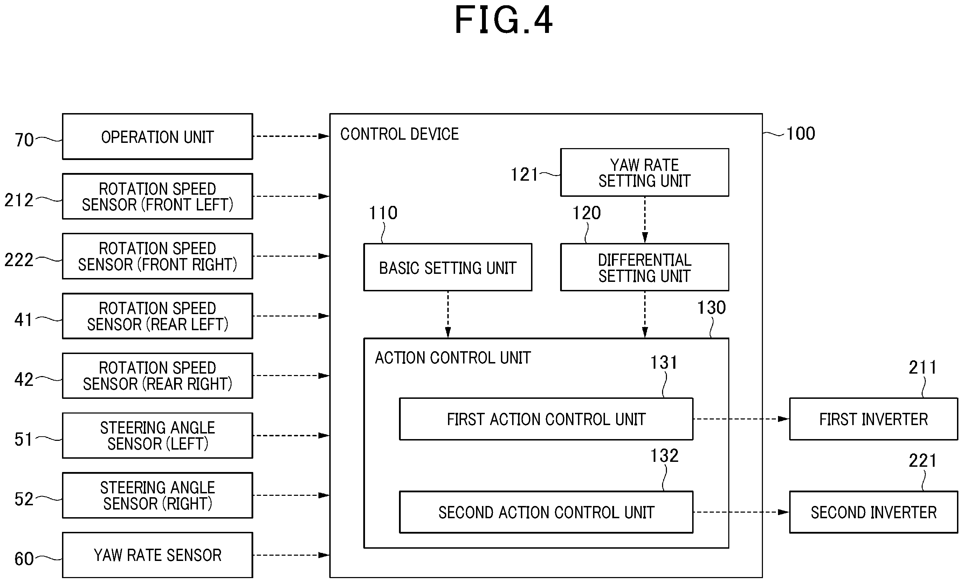

The configuration of the control device 100 will be described with reference to Fig. 4. The control device 100 is a computer system including a CPU, a ROM, a RAM, and the like. The control device 100 is configured as a device for controlling the entire vehicle 10, including the first dynamo-electric machine 210 and the second dynamo-electric machine 220. The control device 100 may be configured by a single device, but may also be configured by a plurality of devices that perform bidirectional communication with each other. The entire control device 100 may be mounted on the vehicle 10, but part or all of **the control device 100** may be realized, for example, as functions provided on a cloud server.

The signals from the operation unit 70, and the signals from various sensors, such as the rotation speed sensor 212, are input to the control device 100. As a result of the control device 100 controlling the operation of each of the first inverter 211 and the second inverter 221 based on these signals, it is possible to realize each of the operations of "traveling", "stopping", and "turning" of the vehicle 10. The control device 100 includes a basic setting unit 110, a differential setting unit 120, a yaw rate setting unit 121, and an action control unit 130 as block elements representing the functions.

The basic setting unit 110 is a part that performs processing that sets a basic rotation speed $R_a$. For convenience of the description, the average value of the first rotation speed $R_{b1}$ and the second rotation speed $R_{b2}$ is also referred to as an "average rotation speed $R_b$" below. That is, $Rb = (R_{b1} + R_{b2}) / 2$. The basic rotation speed $R_a$ mentioned above is the target value that is set for the average rotation speed $R_b$. The control device 100 controls the operation of each of the first inverter 211 and the second inverter 221 such that the actual average rotation speed $R_b$ matches the basic rotation speed $R_a$ that has been set by the basic setting unit 110.

The differential setting unit 120 is a part that performs processing that sets a differential rotation speed. The "differential rotation speed" refers to a target value that is set with respect to the difference between the first rotation speed $R_{b1}$ and the second rotation speed $R_{b2}$. For convenience of the description, the half-value of the differential rotation speed is also referred to as "ΔR" below. That is, the differential rotation speed = 2 × ΔR. As described below, the control device 100 controls the operation of the first inverter 211 such that the first rotation speed $R_{b1}$ becomes the value obtained when ΔR is added to the average rotation speed $R_b$. Furthermore, the control device 100 controls the operation of the second inverter 221 such that the second rotation speed $R_{b2}$ becomes the value obtained when ΔR is subtracted from the average rotation speed $R_b$. As a result of performing such a control, the difference between the first rotation speed $R_{b1}$ and the second rotation speed $R_{b2}$ matches the value of 2 × ΔR, which is the differential rotation speed. As a result of the differential setting unit 120 appropriately setting the value of the differential rotation speed, the turning operations of the vehicle 10 are controlled.

The yaw rate setting unit 121 is a part that performs processing that sets a target yaw rate $Y_a$. The "target yaw rate $Y_a$" is a target value that is set with respect to the yaw rate $Y_b$. As described below, the differential setting unit 120 sets the differential rotation speed based on a differential between the target yaw rate $Y_a$ and the yaw rate $Y_b$ (that is, the deviation of the yaw rate).

The action control unit 130 is a part that performs processing that controls the operation of each of the first dynamo-electric machine 210 and the second dynamo-electric machine 220. The action control unit 130 controls the operation of each of the first dynamo-electric machine 210 and the second dynamo-electric machine 220 such that the average value of the first rotation speed $R_{b1}$ and the second rotation speed $R_{b2}$ (that is, the average rotation speed $R_b$) becomes the basic rotation speed $R_a$ mentioned above, and the difference between the first rotation speed $R_{b1}$ and the second rotation speed $R_{b2}$ becomes the differential rotation speed mentioned above (that is, 2 × ΔR).

The action control unit 130 includes a first action control unit 131 and a second action control unit 132 as block elements representing the functions. The first action control unit 131 is a part that performs processing that controls the operation of the first dynamo-electric machine 210. The first action control unit 131 controls the first dynamo-electric machine 210 by controlling the operation of the first inverter 211. The second action control unit 132 is a part that performs processing that controls the operation of the second dynamo-electric machine 220. The second action control unit 132 controls the second dynamo-electric machine 220 by controlling the operation of the second inverter 221.

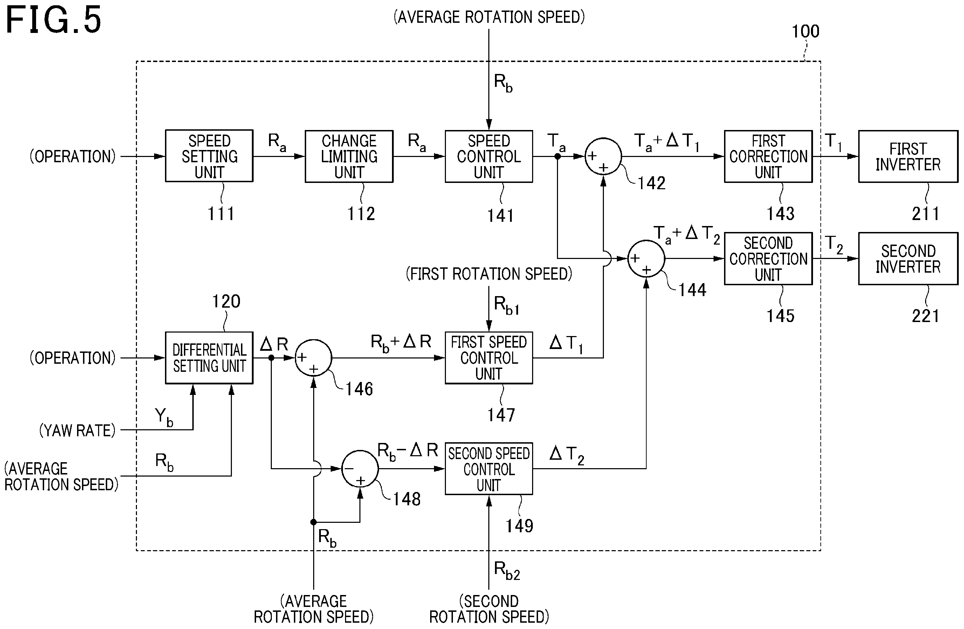

The specific content of the control performed by the control device 100 will be described mainly with reference to Fig. 5. Fig. 5 shows the content of the control performed by the control device 100 as a block diagram.

When the vehicle 10 travels, signals representing the content of the operations performed by the passenger with respect to the operation unit 70 are input from the operation unit 70 to the control device 100. The speed setting unit 111 shown in Fig. 5 sets the basic rotation speed $R_a$ based on the signals from the operation unit 70. However, the basic rotation speed $R_a$ set by the speed setting unit 111 is not the final value used in the control. The basic rotation speed $R_a$ becomes the final value used in the control as a result of being corrected by a change limiting unit 112 described later. The speed setting unit 111 and the change limiting unit 112 are blocks representing the functions of the basic setting unit 110 shown in Fig. 4.

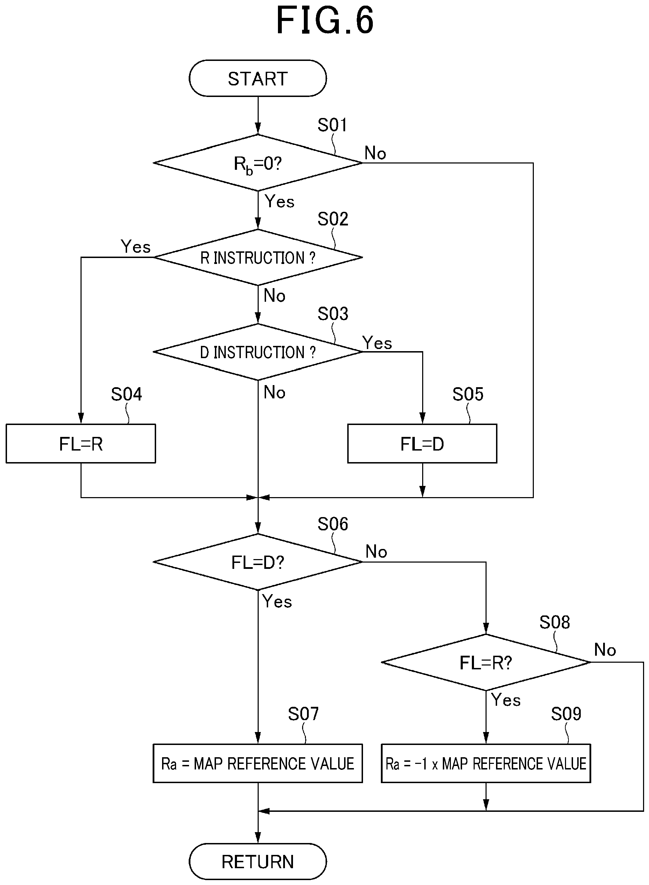

The specific flow of the processing performed by the speed setting unit 111 for setting the basic rotation speed $R_a$ will be described with reference to Fig. 6. The series of processing shown in Fig. 6 is repeatedly executed in the control device 100 every time a predetermined control period elapses.

In the first step S01, it is determined whether the vehicle speed of the vehicle 10 is 0. Such a determination is performed based on the value of the average rotation speed $R_b$ acquired by the rotation speed sensors 212 and 222. Note that, although the vehicle speed of the vehicle 10 may be acquired by the rotation speed sensors 212 and 222, the vehicle speed may also be acquired by the rotation speed sensors 41 and 42.

When the average rotation speed $R_b$ is 0, that is, when the vehicle speed of the vehicle 10 is 0, the processing shifts to step S02. In step S02, it is determined whether an operation for switching the shift range to R has been performed with respect to the R switch 712. When such an operation has been performed, the processing shifts to step S04. In step S04, the value of a flag FL is set to "R". Then, the processing shifts to step S06 described below.

In step S02, if an operation for setting the shift range to "R" was not performed, the processing shifts to step S03. In step S03, it is determined whether an operation for switching the shift range to D has been performed with respect to the D switch 713. When such an operation has been performed, the processing shifts to step S05. In step S05, the value of the flag FL is set to "D". Then, the processing shifts to step S06.

In step S03, if an operation for setting the shift range to "D" was not performed, the processing shifts to step S06. In step S06, it is determined whether the value of the flag FL is "D". When the value of the flag FL is "D", the processing shifts to step S07.

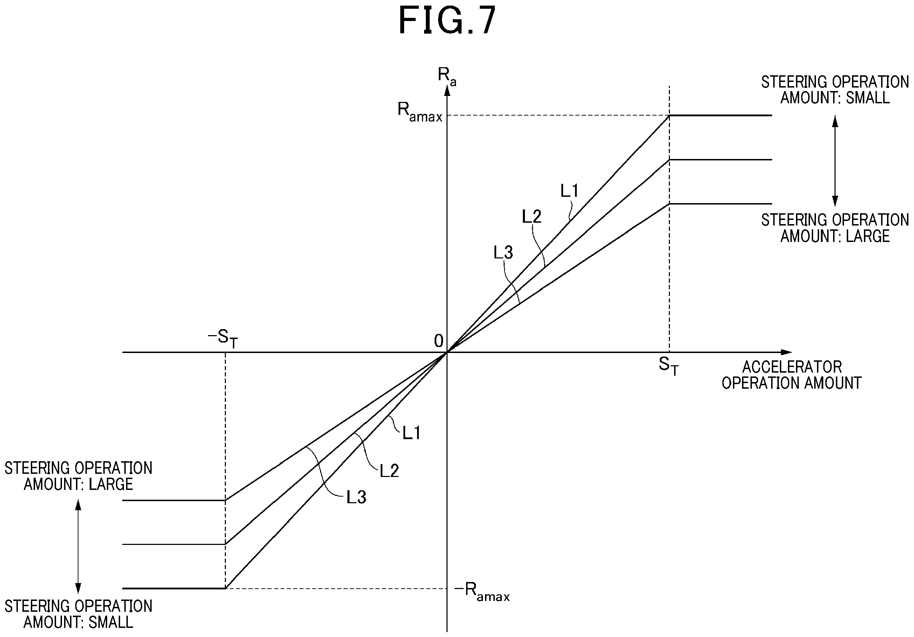

If the processing shifts to step S07, because the shift range of the vehicle 10 is set to "D", the vehicle 10 moves forward based on operations performed with respect to the lever 720. In step S07, for example, the basic rotation speed $R_a$ is set based on the maps shown in Fig. 7. The maps are maps representing the correspondence between an accelerator operation amount performed with respect to the lever 720 (horizontal axis) and the basic rotation speed $R_a$ that is set, and are stored in advance in a storage device (not shown) provided in the control device 100. In the present embodiment, a plurality of different maps are stored that correspond to the magnitude of the steering operation amount performed with respect to the lever 720. Note that, when the accelerator operation amount shown on the horizontal axis in Fig. 7 is a negative value, the value of the basic rotation speed $R_a$ is also set to a negative value, and a deceleration torque having a magnitude corresponding to the absolute value of the accelerator operation amount is generated in the first dynamo-electric machine 210 and the like. That is, an accelerator operation amount having a negative value can also be referred to as a "brake operation amount".

The map represented by the line L1 in Fig. 7 is a map that is referred to when the steering operation amount is relatively small, that is, when the change in the traveling direction of the vehicle 10 is relatively small. The map represented by the line L2 is a map that is referred to when the steering operation amount is a moderate level, that is, when the change in the traveling direction of the vehicle 10 is a moderate level. The map represented by the line L3 is a map that is referred to when the steering operation amount is relatively large, that is, when the change in the traveling direction of the vehicle 10 is relatively large. Note that the number of maps that are stored in advance according to the magnitude of the steering operation amount may be two or less, or four or more.

As shown in Fig. 7, as the accelerator operation amount becomes larger, the absolute value of the basic rotation speed $R_a$ that is set also becomes larger. Furthermore, the maps are selected such that as the steering operation amount becomes larger, the absolute value of the basic rotation speed $R_a$ that is set becomes smaller. In this way, the setting of the basic rotation speed $R_a$ by the basic setting unit 110 is performed based on both the accelerator operation amount and the steering operation amount with respect to the operation unit 70.

In each of the maps, when the accelerator operation amount is a positive value and becomes greater than or equal to a predetermined value $S_T$, the basic rotation speed $R_a$ does not become a larger value, and remains a constant value. The value "$R_{amax}$" shown in **Fig. 7** is the maximum value of the basic rotation speed Ra that is set when the steering operation amount is the smallest. Similarly, when the accelerator operation amount is a negative value and becomes less than or equal to a predetermined value -$S_T$, the basic rotation speed $R_a$ does not become a smaller value, and remains a constant value. The value "-$R_{amax}$" shown in **Fig. 7** is the minimum value of the basic rotation speed Ra that is set when the steering operation amount is the smallest. Regardless of the values the accelerator operation amount and the steering operation amount, the absolute value of the basic rotation speed $R_a$ that is set does not exceed $R_{amax}$. In this way, the basic setting unit 110 sets the basic rotation speed $R_a$ within a predetermined limited range. Such a range, that is, a range from an absolute value of 0 or more up to a fixed value regardless of the accelerator operation amount, corresponds to a "first range" in the present embodiment. As a result of the basic rotation speed $R_a$ being suppressed within the first range, and the maximum vehicle speed being suppressed, the vehicle 10 is realized as a slow mobility vehicle.

The description will be continued returning to Fig. 6. In step S07, the value obtained by referring to the maps in Fig. 7 described above is set as the value of the basic rotation speed $R_a$. Then, the series of processing shown in Fig. 6 ends.

In step S06, if the value of the flag FL is not "D", the processing shifts to step S08. In step S08, it is determined whether the value of the flag FL is "R". When the value of the flag FL is "R", the processing shifts to step S09.

If the processing shifts to step S09, because the shift range of the vehicle 10 is set to "R", the vehicle 10 moves backward based on operations performed with respect to the lever 720. In step S09, like the case where the processing has shifted to step S07, the maps shown in Fig. 7 are referenced. In step S09, the value obtained after multiplying -1 to the value obtained by referring to the maps in Fig. 7 is set as the value of the basic rotation speed $R_a$. Then, the series of processing shown in Fig. 6 ends. Instead of such an implementation, the basic

rotation speed $R_a$ when moving backward may be set using maps having a different form than the maps used when moving forward.

In step S01, if the average rotation speed $R_b$ is not 0, that is, when the vehicle speed of the vehicle 10 is not 0, the processing from step S06 onwards is performed after returning the content of the flag FL to an initial value (that is, to a value that is not "R" or "D"). In this case, because the determination in step S08 is "No", the series of processing shown in Fig. 6 ends without setting the value of the basic rotation speed $R_a$.

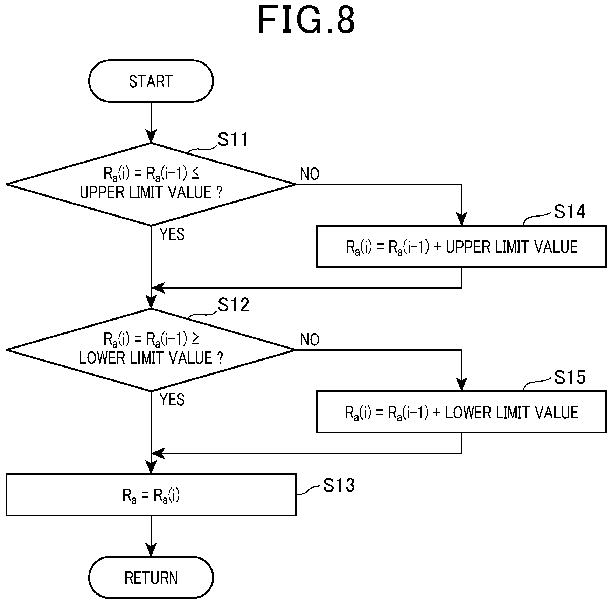

The description will be continued returning to Fig. 5. The value of the basic rotation speed $R_a$ that has been set by the speed setting unit 111 is input to the change limiting unit 112. Note that the value of the basic rotation speed $R_a$ that is input to the change limiting unit 112 changes over time according to the operations performed by the passenger with respect to the operation unit 70. The change limiting unit 112 is a block for performing filtering processing with respect to the basic rotation speed $R_a$ that is input, such that sudden changes over time are suppressed. The content of the processing performed in the change limiting unit 112 will be described with reference to the flowchart shown in Fig. 8.

The value of the basic rotation speed $R_a$ that is input from the speed setting unit 111 to the change limiting unit 112 is denoted here as "$R_a(i)$". The value "i" is an index value that is incremented each time a control period elapses, and $R_a(i)$ represents the value of the basic rotation speed Ra that is input in the most recent control period. In the first step S11 in the processing shown in Fig. 8, it is determined whether a differential value obtained by subtracting $R_a(i-1)$ from $R_a(i)$ is a predetermined upper limit value or less. Because the "differential value" mentioned above is the amount of increase in the basic rotation speed $R_a$ per control period, it can be said to be a value that corresponds to the acceleration of the vehicle 10. The "upper limit value" mentioned above is, for example, set to a value corresponding to a case where the acceleration of the vehicle 10 is 0.2 G.

When the differential value is the upper limit value or less, the processing shifts to step 512. When the differential value exceeds the upper limit value, the processing shifts to step S14. In step S14, processing is performed that rewrites the value of $R_a(i)$ with the value obtained by adding the upper limit value mentioned above to $R_a(i-1)$. Then, the processing shifts to step S12.

In step S12, it is determined whether a differential value obtained by subtracting $R_a(i-1)$ from $R_a(i)$ is a predetermined lower limit value or more. The "lower limit value" mentioned above is, for example, set to a value corresponding to a case where the acceleration of the vehicle 10 is - 0.2 G.

When the differential value is the lower limit value or larger, the processing shifts to step S13. When the differential value is below the lower limit value, the processing shifts to step S15. In step S15, processing is performed that rewrites the value of $R_a(i)$ with the value obtained by adding the lower limit value mentioned above to $R_a(i-1)$. Then, the processing shifts to step S13.

In step S13, processing is performed that outputs the value of $R_a(i)$ as the final value of the basic rotation speed $R_a$.

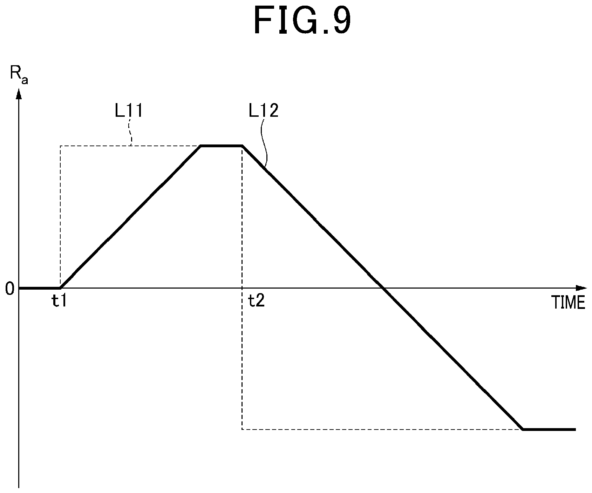

As a result the processing above being performed, the value of the basic rotation speed $R_a$ that is output from the change limiting unit 112 changes, for example, as shown in Fig. 9. The line L11 in Fig. 9 represents an example of the change in the basic rotation speed $R_a$ that is input to the change limiting unit 112 over time. The line L12 in the same diagram represents an example of the change in the basic rotation speed $R_a$ that is output from the change limiting unit 112 over time. In this example, the value of the basic rotation speed $R_a$ that is input to the change limiting unit 112 (line L11) changes in a step shape at each of a time point t1 and a time point t2. In contrast, the value of the basic rotation speed $R_a$ that is output from the change limiting unit 112 (line L12) does not change in a step shape, and the amount of change per unit time is an amount of change that is limited by the upper limit value and the lower limit value mentioned above.

In this way, the basic setting unit 110, which includes the change limiting unit 112, changes the basic rotation speed $R_a$ such that the amount of change per unit time is within a predetermined range. The range inside which the amount of change in the basic rotation speed $R_a$ per unit time is limited, that is, the range limited by the upper limit value and the lower limit value mentioned above, corresponds to a "second range" in the present embodiment. As a result of the amount of change in the basic rotation speed $R_a$ being limited in this way, the average rotation speed $R_b$, which is an actual measurement value, is prevented from significantly deviating from the basic rotation speed $R_a$, which is the target value.

As shown in Fig. 5, the basic rotation speed $R_a$ that is output from the change limiting unit 112 is output to a speed control unit 141. In addition to the basic rotation speed $R_a$, the value of the average rotation speed $R_b$ is input to the speed control unit 141. In the speed control unit 141, in order to bring the value of the average rotation speed $R_b$ closer to the basic rotation speed $R_a$, the value of a base torque $T_a$ to be output from each of the first dynamo-electric machine 210 and the second dynamo-electric machine 220 is calculated by a feedback control.

For example, when PI control is performed as the feedback control, the speed control unit 141 first calculates a speed deviation using equation (1) below.

$$eV = R_a - R_b \ ... \ (1)$$

Then, the speed control unit 141 calculates the base torque $T_a$ using equation (2) below.

$$Ta = K_{p1} \times eV + K_{i1} \times \int eV \ldots (2)$$

The term "$K_{p1}$" in the first term on the right side in equation (2) is a proportional gain, and the term "$K_{i1}$" in the second term on the right side is an integral gain. The values of $K_{p1}$ and $K_{i1}$ are fixed values that are set in advance in consideration of the stability of the control and the like.

The speed control unit 141 outputs the value of $T_a$ obtained from equation (2) as the base torque $T_a$. Note that limitations may be added such that the value of $T_a$ falls within a predetermined range.

The value of the base torque $T_a$ calculated by the speed control unit 141 is input to an adder 142. In the adder 142, a differential torque $\Delta Ti$ is added to the base torque $T_a$, and the obtained value ($T_a + \Delta Ti$) is input to a first correction unit 143. The differential torque $\Delta Ti$ is the value of the torque to be added to the base torque $T_a$ of the first dynamo-electric machine 210 such that the difference between the first rotation speed $R_{b1}$ and the second rotation speed $R_{b2}$ becomes the differential rotation speed ($2 \times \Delta R$) described previously. As described below, the differential torque $\Delta Ti$ is calculated by the processing of the differential setting unit 120 and the like.

The first correction unit 143 calculates and outputs Ti, which is a command value of the torque to be output from the first dynamo-electric machine 210, based on the input value of $T_a + \Delta Ti$. The first correction unit 143 generally outputs the input value of $T_a + \Delta T_1$ directly as $T_1$. At this time, the first correction unit 143 may output $T_1$ after performing an appropriate correction for the purpose of protecting the parts of each unit and the rechargeable battery of the vehicle 10, and for the purpose of preventing the deterioration of ride comfort due to sudden changes in the torque and the like. As the "correction" referred to here, for example, it is possible to perform processing that keeps $T_1$ within a predetermined range, filtering for making the change in $T_1$ over time more gradual, and the like.

The value of $T_1$ calculated by the first correction unit 143 is input to the first inverter 211. The first inverter 211 adjusts the current supplied to the first dynamo-electric machine 210 such that the torque generated by the first dynamo-electric machine 210 matches $T_1$. Note that the $T_1$ input from the first correction unit 143 to the first inverter 211 may be input as a torque command value, or may be input as a current command value.

The value of the base torque $T_a$ calculated by the speed control unit 141 is also input to an adder 144. In the adder 144, a differential torque $\Delta T_2$ is added to the base torque $T_a$, and the obtained value ($T_a + \Delta T_2$) is input to a second correction unit 145. The differential torque $\Delta T_2$ is the value of the torque to be added to the base torque $T_a$ of the second dynamo-electric machine 220 such that the difference between the first rotation speed $R_{b1}$ and the second rotation speed $R_{b2}$ becomes the differential rotation speed ($2 \times \Delta R$) described previously.

Like the differential torque $\Delta Ti$, the differential torque $\Delta T_2$ is calculated by processing performed by the differential setting unit 120 and the like.

The second correction unit 145 calculates and outputs $T_2$, which is a command value of the torque to be output from the second dynamo-electric machine 220, based on the value of $T_a + \Delta T_2$ that has been input. The second correction unit 145 generally outputs the input value of $Ta + \Delta T_2$ directly as $T_2$. At this time, the second correction unit 145 may output $T_2$ after performing an appropriate correction for the purpose of protecting the parts of each unit and the rechargeable battery of the vehicle 10, and for the purpose of preventing the deterioration of ride comfort due to sudden changes in the torque and the like. As the "correction" referred to here, for example, it is possible to perform processing that keeps $T_2$ within a predetermined range, filtering for making the change in $T_2$ over time more gradual, and the like.

The $T_2$ calculated by the second correction unit 145 is input to the second inverter 221. The second inverter 221 adjusts the current supplied to the second dynamo-electric machine 220 such that the torque generated by the second dynamo-electric machine 220 matches $T_2$. Note that the $T_2$ input from the second correction unit 145 to the second inverter 221 may be input as a torque command value, or may be input as a current command value.

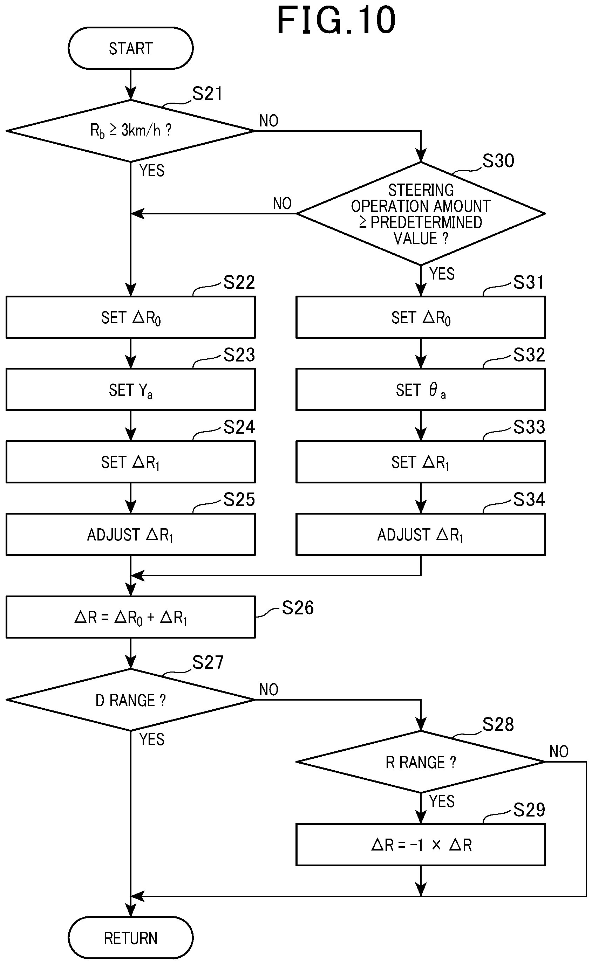

The processing performed for calculating the differential torques $\Delta Ti$ and $\Delta T_2$ will be described. The differential setting unit 120 shown in Fig. 5 is a block representing the functions of the differential setting unit 120 shown in Fig. 4. The differential setting unit 120 calculates the value of $\Delta R$ described above based on the signals input from the operation unit 70, and the values of the yaw rate $Y_b$ and the average rotation speed $R_b$. Specifically, the differential setting unit 120 calculates the value of $\Delta R$ by executing the series of processing shown in Fig. 10.

In the first step S21 of the processing, it is determined whether the value of the average rotation speed $R_b$ is greater than or equal to a rotation speed when the vehicle speed is 3 km/h. That is, it is determined whether the vehicle speed of the vehicle 10 is greater than or equal to 3 km/h based on the value of the average rotation speed $R_b$. Such a determination may also be performed based on the measurement values of the rotation speed sensors 41 and 42.

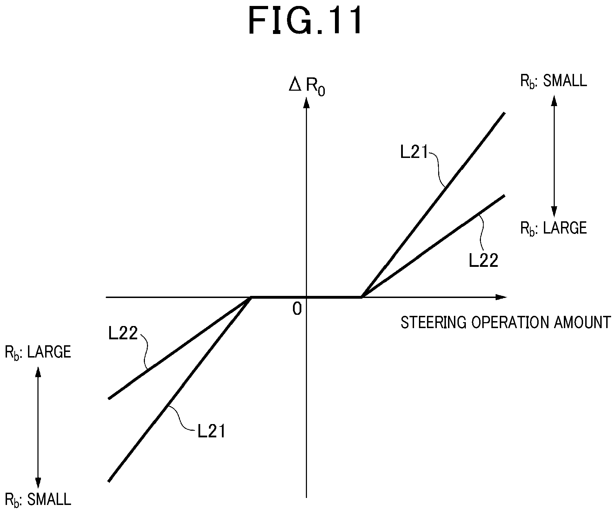

If the vehicle speed is 3 km/h or more, the processing shifts to step S22. In step S22, processing that sets the value of $\Delta R_0$ is performed. $\Delta R_0$ is used as a base value of $\Delta R$. The differential setting unit 120 sets the value of $\Delta R_0$, for example, based on the maps shown in Fig. 11. The maps shown in Fig. 11 are maps representing the correspondence between a steering operation amount performed with respect to the lever 720 (horizontal axis) and the calculated $\Delta R_0$, and are stored in advance in a storage device (not shown) provided in the control device 100. In the present embodiment, a plurality of different maps are stored according to the value of the average rotation speed $R_b$, which represents the vehicle speed.

The map represented by the line L21 in Fig. 11 is a map that is referred to when the vehicle speed is relatively low. The map represented by the line L22 is a map that is referred to when the vehicle speed is relatively high. Note that the number of maps that are stored in advance according to the vehicle speed may be three or more.

As shown in Fig. 11, as the steering operation amount becomes larger, the $\Delta R_0$ that is set also becomes larger. Furthermore, the maps are selected such that as the average rotation speed $R_b$ representing the vehicle speed increases, the set value of $\Delta R_0$ decreases. In this way, the setting of $\Delta R_0$ by the differential setting unit 120 is performed based on both the accelerator operation amount and the steering operation amount with respect to the operation unit 70.

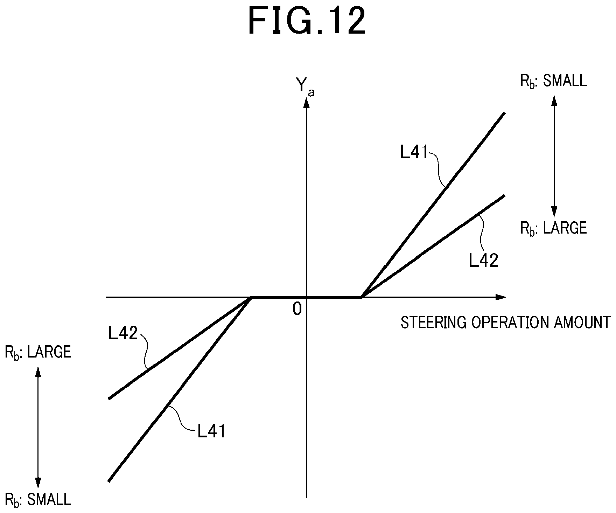

After the value of $\Delta R_0$ is set in step S22 in Fig. 10, the processing shifts to step S23. In step S23, a target yaw rate $Y_a$ is set by the yaw rate setting unit 121. The yaw rate setting unit 121 sets the target yaw rate $Y_a$, for example, based on the maps shown in Fig. 12. The maps shown in Fig. 12 are maps representing the correspondence between a steering operation amount performed with respect to the lever 720 (horizontal axis) and the target yaw rate $Y_a$, and are stored in advance in a storage device (not shown) provided in the control device 100. In the present embodiment, a plurality of different maps are stored according to the value of the average rotation speed $R_b$, which represents the vehicle speed.

The map represented by the line L41 in Fig. 12 is a map that is referred to when the vehicle speed is relatively low. The map represented by the line L42 is a map that is referred to when the vehicle speed is relatively high. Note that the number of maps that are stored in advance according to the vehicle speed may be three or more.

As shown in Fig. 12, as the steering operation amount becomes larger, the target yaw rate $Y_a$ that is set also becomes larger. Furthermore, the maps are selected such that as the average rotation speed $R_b$ representing the vehicle speed increases, the set target yaw rate $Y_a$ decreases. In this way, the setting of the target yaw rate $Y_a$ by the yaw rate setting unit 121 is performed based on both the accelerator operation amount and the steering operation amount with respect to the operation unit 70.

After the value of the target yaw rate $Y_a$ is set in step S23 in Fig. 10, the processing shifts to step S24. In step S24, processing that calculates the value of $\Delta R_1$ is performed. $\Delta R_1$ is used as a correction value to be added to $\Delta R_0$, which is the base value of $\Delta R$. In calculating the value of $\Delta R_1$, the differential setting unit 120 first calculates a yaw rate deviation eY using equation (3) below.

$$eY = Y_a - Y_b \dots (3)$$

As shown in equation (3), the yaw rate deviation eY is the difference between the target yaw rate $Y_a$ and the actual yaw rate $Y_b$ that has been measured. Then, the differential setting unit 120 calculates $\Delta R_1$ using equation (4) below.

$$\Delta R_1 = K_{p2} \times eY + K_{i2} \times \int eY \dots (4)$$

The term "$K_{p2}$" in the first term on the right side in equation (2) is a proportional gain, and the term "$K_{i2}$" in the second term on the right side is an integral gain. The values of $K_{p2}$ and $K_{i2}$ are fixed values that are set in advance in consideration of the stability of the control and the like.

After the value of $\Delta R_1$ is calculated in step S24 as described above, the processing shifts to step S25. In step S25, an adjustment is made such that the value of $\Delta R_1$ falls within a predetermined range. Note that such an adjustment is not essential, and may be performed as necessary for the purpose of ensuring the stability of the control and the like.

In step S26 following step S25, the value obtained by adding $\Delta R_1$ calculated in steps S24 and S25 to $\Delta R_0$ that has been set in step S22 is calculated as $\Delta R$.

In step S27 following step S26, it is determined whether the current shift range set by operation of the operation unit 70 is "D". When the shift range is "D", the $\Delta R$ calculated in step S26 is directly output from the differential setting unit 120 as the final $\Delta R$. When the shift range is not "D", the processing shifts to step S28.

In step S28, it is determined whether the current shift range set by operation of the operation unit 70 is "R". When the shift range is "R", the processing shifts to step S29. In step S29, processing that inverts the sign is performed by multiplying the $\Delta R$ calculated in step S26 by (-1). The $\Delta R$ obtained by this processing is output from the differential setting unit 120 as the final $\Delta R$.

In this way, the differential setting unit 120 of the present embodiment is configured to calculate $\Delta R$ based on a difference between the target yaw rate $Y_a$ and the actual yaw rate $Y_b$ measured by the yaw rate sensor 60, and set the differential rotation speed, which is $2 \times \Delta R$.

In step S21, when the vehicle speed of the vehicle 10 is less than 3 km/h, the processing shifts to step S30. In step S30, it is determined whether the steering operation amount is greater than or equal to a predetermined value. The "predetermined value" referred to here is set in advance as a value that is slightly smaller than an upper limit value of the steering operation amount. When the steering operation amount is less than the predetermined value, the processing shifts to step S22, and the same processing as described above is performed. When the steering operation amount is greater than or equal to the predetermined value, the processing shifts to step S31.

A shift to step S31 indicates that a relatively large steering operation has been performed while the vehicle 10 is stopped or is traveling at a very constant speed. In other words, an operation referred to as "stationary steering" has been performed. In this case, in the differential setting unit 120 of the present embodiment, the calculation of ΔR is performed using a different method from that described above.

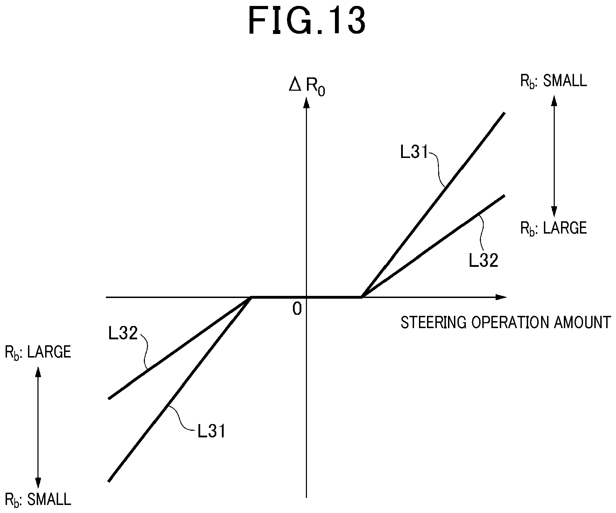

In step S31, like step S22, processing that sets the value of $\Delta R_0$ is performed. The differential setting unit 120 sets the value of $\Delta R_0$, for example, based on the maps shown in Fig. 13. The maps shown in Fig. 13 are map representing the correspondence between a steering operation amount performed with respect to the lever 720 (horizontal axis) and the calculated $\Delta R_0$, and are stored in advance in a storage device (not shown) provided in the control device 100. In the present embodiment, a plurality of different maps are stored according to the value of the average rotation speed $R_b$, which represents the vehicle speed.

The map represented by the line L31 in Fig. 13 is a map that is referred to when the vehicle speed is relatively low. The map represented by the line L32 is a map that is referred to when the vehicle speed is relatively high. Note that the number of maps that are stored in advance according to the vehicle speed may be three or more.

As shown in Fig. 13, as the steering operation amount becomes larger, the $\Delta R_0$ that is set also becomes larger. Furthermore, the maps are selected such that as the average rotation speed $R_b$ representing the vehicle speed increases, the set value of $\Delta R_0$ decreases. In this way, the setting of $\Delta R_0$ by the differential setting unit 120 is performed based on both the accelerator operation amount and the steering operation amount with respect to the operation unit 70.

After the value of $\Delta R_0$ is set in step S31 in Fig. 10, the processing shifts to step S32. In step S32, processing that sets the value of $\theta_a$ is performed. $\theta_a$ is a steering angle set as a target value for the steering angle $\theta_1$ of the first driven wheel 31 and the steering angle $\theta_2$ of the second driven wheel 32. In the present embodiment, when a stationary steering operation has been performed, the value of ΔR is appropriately set such that the average value of the steering angle $\theta_1$ and the steering angle $\theta_2$ matches $\theta_a$, which is the target value.

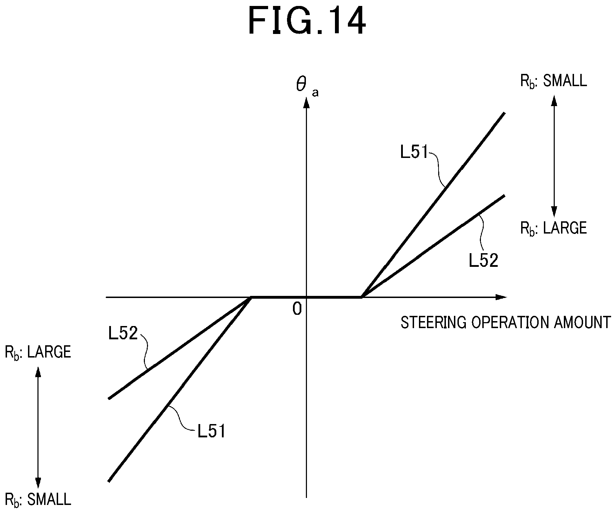

The differential setting unit 120 sets the value of $\theta_a$, for example, based on the maps shown in Fig. 14. The maps shown in Fig. 14 are maps representing the correspondence between a steering operation amount performed with respect to the lever 720 (horizontal axis) and the $\theta_a$ that is set, and are stored in advance in a storage device (not shown) provided in the control device 100. In the present embodiment, a plurality of different maps are stored according to the value of the average rotation speed $R_b$, which represents the vehicle speed.

The map represented by the line L51 in Fig. 14 is a map that is referred to when the vehicle speed is relatively low. The map represented by the line L52 is a map that is referred to when the vehicle speed is relatively high. Note that the number of maps that are stored in advance according to the vehicle speed may be three or more.

As shown in Fig. 14, as the steering operation amount becomes larger, the $\theta_a$ that is set also becomes larger. Furthermore, the maps are selected such that as the average rotation speed $R_b$ representing the vehicle speed increases, the set value of $\theta_a$ decreases. In this way, the setting of $\theta_a$ by the differential setting unit 120 is performed based on both the accelerator operation amount and the steering operation amount with respect to the operation unit 70.

After the value of $\theta_a$ is set in step S32 in Fig. 10, the processing shifts to step S33. In step S33, processing that calculates the value of $\Delta R_1$ is performed. In calculating the value of $\Delta R_1$, the differential setting unit 120 first calculates a steering angle deviation eθ using equation (5) below.

$$e\theta = \theta a - (\theta_1 + \theta_2)/2 \ ... \ (5)$$

Then, the differential setting unit 120 calculates $\Delta R_1$ using equation (6) below.

$$\Delta R_1 = K p_3 \times e\theta + K_{i3} \times \int e\theta \ ... \ (6)$$

The term "$K_{p3}$" in the first term on the right side in equation (6) is a proportional gain, and the term "$K_{i3}$" in the second term on the right side is an integral gain. The values of $K_{p3}$ and $K_{i3}$ are fixed values that are set in advance in consideration of the stability of the control and the like.

After the value of $\Delta R_1$ is calculated in step S33 as described above, the processing shifts to step S34. In step S34, an adjustment is made such that the value of $\Delta R_1$ falls within a predetermined range. Note that such an adjustment is not essential, and may be performed as necessary for the purpose of ensuring the stability of the control and the like.

After the processing of step S34 is performed, the processing shifts to step S26. When the processing shifts from step S24 to step S26, the value obtained by adding $\Delta R_1$ calculated in steps S33 and S34 to $\Delta R_0$ set in step S31 is calculated as ΔR. The subsequent processing is the same as that described above.

As shown in Fig. 5, the ΔR set by the differential setting unit 120 is input to the adder 146. In the adder 146, the value of ΔR is added to the value of the measured average rotation speed $R_b$, and the obtained value ($R_b$ + ΔR) is input to the first speed control unit 147. In addition to ($R_b$ + ΔR), the value of the first rotation speed $R_{b1}$ is input to the first speed control unit 147. In the first speed control unit 147, the value of the differential torque $\Delta Ti$ required to bring the value of the first rotation speed $R_{b1}$ closer to the target value $(R_b + \Delta R)$ is calculated by feedback control.

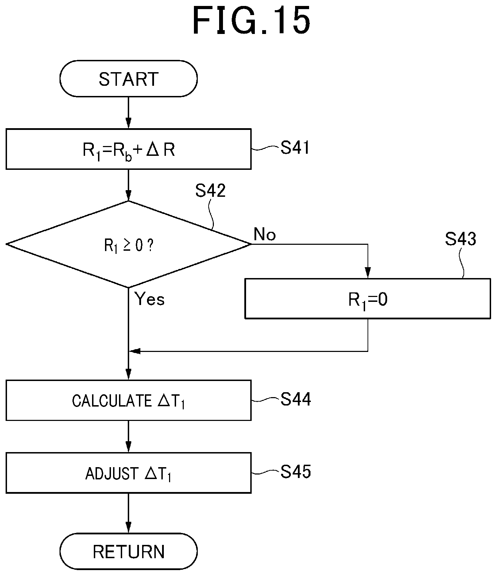

Specifically, the first speed control unit 147 calculates the value of the differential torque $\Delta Ti$ by executing the series of processing shown in Fig. 15.

In the first step S41 of the processing, $R_1$, which is the target value of the first rotation speed $R_{b1}$, is set. Here, the value of $(R_b + \Delta R)$ input to the first speed control unit 147 is directly set as $R_1$.

In step S42 following step S41, it is determined whether the value of $R_1$ is 0 or more. When the value of $R_1$ is 0 or more, the processing shifts to step S44. When the value of $R_1$ is less than 0, the processing shifts to step S43. In step S43, the value of $R_1$ is set to 0. Then, the processing shifts to step S44.

In step S44, processing that calculates the value of the differential torque $\Delta Ti$ is performed. In calculating the value of the differential torque $\Delta Ti$, the first speed control unit 147 first calculates a rotation speed deviation $eRi$ using equation (7) below.

$$eR_1 = (R_b + \Delta R) - R_{b1} \ ... \ (7)$$

Then, the first speed control unit 147 calculates the differential torque $\Delta Ti$ using equation (8) below.

$$\Delta T_1 = K_{p4} \times eR_1 + K_{i4} \times \int eR_1 \ ... \ (8)$$

The term "$K_{p4}$" in the first term on the right side in equation (6) is a proportional gain, and the term "$K_{i4}$" in the second term on the right side is an integral gain. The values of $K_{p4}$ and $K_{i4}$ are fixed values that are set in advance in consideration of the stability of the control and the like.

After the value of the differential torque $\Delta Ti$ is calculated in step S44 as described above, the processing shifts to step S45. In step S45, an adjustment is made such that the value of the differential torque $\Delta Ti$ falls within a predetermined range. Note that such an adjustment is not essential, and may be performed as necessary for the purpose of ensuring the stability of the control and the like.

The value of the differential torque $\Delta Ti$ calculated by the first speed control unit 147 is input to the adder 142 as mentioned above, and is added to the base torque $T_a$.

The $\Delta R$ set by the differential setting unit 120 is also input to the adder 148. In the adder 148, the value of $\Delta R$ is subtracted from the value of the measured average rotation speed $R_b$, and the obtained value $(R_b - \Delta R)$ is input to the second speed control unit 149. In addition to $(R_b - \Delta R)$, the value of the second rotation speed $R_{b2}$ is input to the second speed control unit 149. In the second speed control unit 149, the value of the differential

torque $\Delta T_2$ required to bring the value of the second rotation speed $R_{b2}$ closer to the target value $(R_b - \Delta R)$ is calculated by a feedback control.

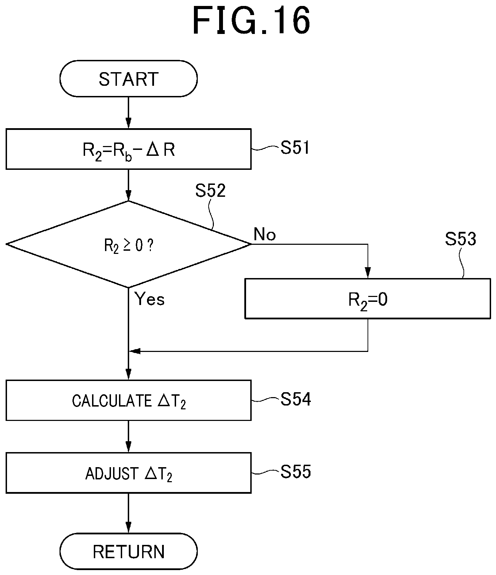

Specifically, the second speed control unit 149 calculates the value of the differential torque $\Delta T_2$ by executing the series of processing shown in Fig. 16.

In the first step S51 of the processing, $R_2$, which is the target value of the second rotation speed $R_{b2}$, is set. Here, the value of $(R_b - \Delta R)$ input to the second speed control unit 149 is directly set as $R2$.

In step S52 following step S51, it is determined whether the value of $R_2$ is 0 or more. When the value of $R_2$ is 0 or more, the processing shifts to step S54. When the value of $R_2$ is less than 0, the processing shifts to step S53. In step S53, the value of $R_2$ is set to 0. Then, the processing shifts to step S54.

In step S54, processing that calculates the value of the differential torque $\Delta T_2$ is performed. In calculating the value of the differential torque $\Delta T_2$, the second speed control unit 149 first calculates a rotation speed deviation $eR_2$ using equation (9) below.

$$eR_2 = (R_b - \Delta R) - R_{b2} \ ... \ (9)$$

Then, the second speed control unit 149 calculates the differential torque $\Delta T_2$ using equation (10) below.

$$\Delta T_2 = K_{p5} \times eR_2 + K_{i5} \times \int eR_2 \ ... \ (10)$$

The term "$K_{p5}$" in the first term on the right side in equation (6) is a proportional gain, and the term "$K_{i5}$" in the second term on the right side is an integral gain. The values of $K_{p5}$ and $K_{i5}$ are fixed values that are set in advance in consideration of the stability of control and the like.

After the value of the differential torque $\Delta T_2$ is calculated in step S54 as described above, the processing shifts to step S55. In step S55, an adjustment is made such that the value of the differential torque $\Delta T_2$ falls within a predetermined range. Note that such an adjustment is not essential, and may be performed as necessary for the purpose of ensuring the stability of control and the like.

The value of the differential torque $\Delta T_2$ calculated by the second speed control unit 149 is input to the adder 144 as mentioned above, and is added to the base torque $T_a$.

As a result of the above control, the rotation speed of the first drive wheel 21 (first rotation speed $R_{b1}$) and the rotation speed of the second drive wheel 22 (second rotation speed $R_{b2}$) are controlled such that the average value of the two rotation speeds matches the basic rotation speed $R_a$, and the differential between the two rotation speeds matches the differential rotation speed $(2 \times \Delta R)$. Consequently, even if various disturbances occur, such as variations in the friction of the first drive wheel 21, variations in the torque of the first dynamo-electric machine 210, and the like, because the rotation speed of each drive wheel matches the target value, highly robust control can be achieved.

In addition, by controlling the differential between the first rotation speed $R_{b1}$ and the second rotation speed $R_{b2}$ to match the differential rotation speed, it is possible to ensure the straight travel of the vehicle 10, and "turning" operations can also be appropriately performed. Further, because the differential rotation speed is set based on the value of the yaw rate $Y_b$ measured by the yaw rate sensor 60, even if an error occurs in the acquired value of the first rotation speed $R_{b1}$ and the like, the error is absorbed and it is possible to appropriately perform straight travel and "turning" operations.

As described with reference to Fig. 15, when $R_1$, which is the target value of the first rotation speed $R_{b1}$, is calculated as a negative value, $R_1$ is set to 0 (step S43). Furthermore, as described with reference to Fig. 16, when $R_2$, which is the target value of the second rotation speed $R_{b2}$, is calculated as a negative value, $R_2$ is set to 0 (step S53). Consequently, for example, when a large steering operation is performed while the vehicle 10 is stopped or traveling at low speed, the rotation speed of one drive wheel is set to 0, and the vehicle 10 turns around that drive wheel. As a result, the turning operation of the vehicle 10 can be stabilized.

The operation of the control device 100 described with reference to Fig. 5 and the like are achieved by a program (that is, a program for a moving body) that is built into the control device 100. The program causes the control device 100 to set the basic rotation speed $R_a$, which is the target value of the average value of the first rotation speed $R_{b1}$ and the second rotation speed $R_{b2}$, and set the differential rotation speed ($2 \times \Delta R$), which is the target value of the difference between the first rotation speed $R_{b1}$ and the second rotation speed $R_{b2}$. Furthermore, the program causes the control device 100 to control the operation of the first dynamo-electric machine 210 and the second dynamo-electric machine 220 such that the average value of the first rotation speed $R_{b1}$ and the second rotation speed $R_{b2}$ becomes the basic rotation speed $R_a$, and the difference between the first rotation speed $R_{b1}$ and the second rotation speed $R_{b2}$ becomes the differential rotation speed $R_b$.

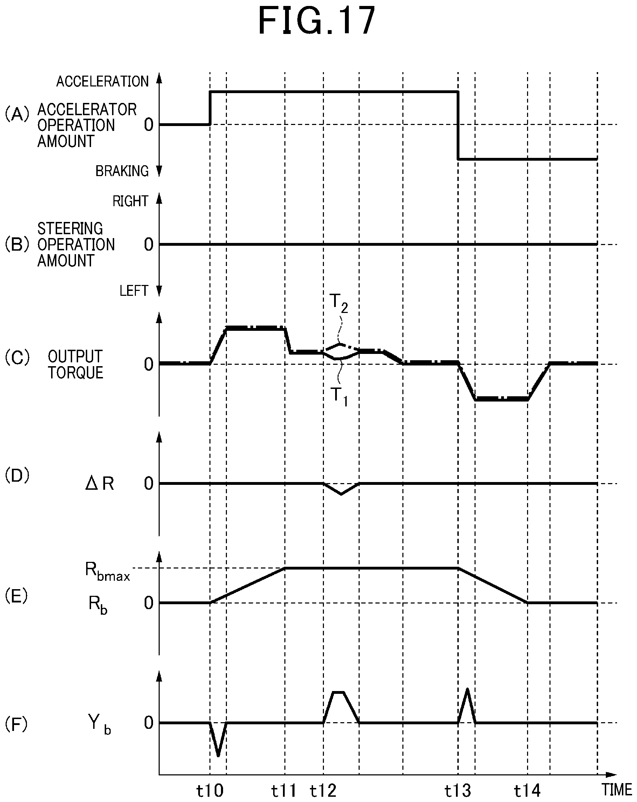

An example of the change in each parameter over time when a control such as that described above is performed by the control device 100 will be described. Fig. 17(A) shows the change in the accelerator operation amount over time, and Fig. 17(B) shows the change in the steering operation amount over time. Fig. 17(C) shows the change in the torque (Ti) generated by the first dynamo-electric machine 210 and the torque ($T_2$) generated by the second dynamo-electric machine 220 over time. Fig. 17(D) shows the change in $\Delta R$, which is one-half of the differential rotation speed, over time. Fig. 17(E) shows the change in the average rotation speed $R_b$ over time. Fig. 17(F) shows the change in the yaw rate $Y_b$ over time.

In the example of Fig. 17, at a time point t10, an operation that increases the accelerator operation amount from 0 has been performed. The steering operation amount remains at 0. After the time point t10, the torque is increasing in each of the first dynamo-electric machine 210 and the second dynamo-electric machine 220, and the average rotation speed $R_b$ is also increasing.

The average rotation speed Rb does not increase after reaching $R_{bmax}$, and remains constant at $R_{bmax}$. This is because the average rotation speed $R_b$ has reached the basic rotation speed $R_a$ corresponding to the accelerator operation amount. When the accelerator operation amount is greater than or equal to the predetermined value $S_T$, $R_{bmax}$ in Fig. 17(E) becomes a value corresponding to $R_{amax}$ in Fig. 7.

At a time point 111, after the average rotation speed $R_b$ reaches $R_{bmax}$, the torque is decreasing in each of the first dynamo-electric machine 210 and the second dynamo-electric machine 220, and the vehicle 10 travels at a constant vehicle speed corresponding to the average rotation speed $R_b$. Then, at a time point t13, when an operation for deceleration is performed and the accelerator operation amount is set to a negative value, a torque is generated in a negative direction in each of the first dynamo-electric machine 210 and the second dynamo-electric machine 220. As a result, the average rotation speed $R_b$ decreases, and becomes 0 at a time point t14. That is, the vehicle 10 stops. Although the accelerator operation amount remains negative, because the shift range is unchanged and is set to "D", the vehicle 10 remains stopped after the time point t14.

As shown in Fig. 17(F), at a time point 112 when the vehicle is traveling at a constant speed, the yaw rate $Y_b$ temporarily increases. This is because, for example, a disturbance has occurred as a result of unevenness of the road surface on which the vehicle 10 is traveling. At this time, as shown in Fig. 17(C), a difference has occurred between the torque (Ti) generated by the first dynamo-electric machine 210 and the torque ($T_2$) generated by the second dynamo-electric machine 220. This is because, as described with reference to Fig. 10, feedback of the yaw rate $Y_b$ has been performed, and the differential rotation speed ($2 \times \Delta R$) has been set to a value that is different from 0. The yaw rate $Y_b$ immediately converges to 0 due to the difference that has been generated in the left and right torques. As a result, the straight travel stability of the vehicle 10 is ensured by the control performed by the control device 100.

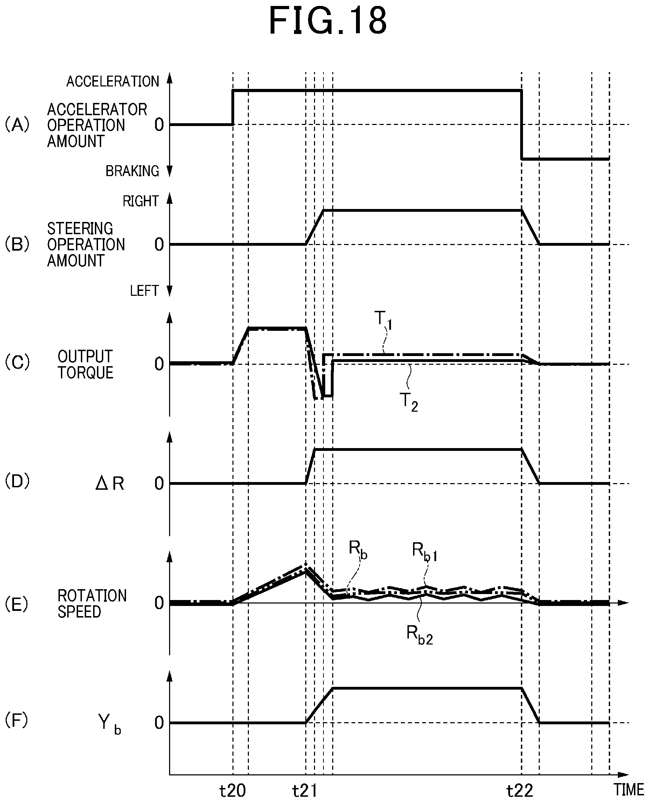

Another operation example will be described. Fig. 18(A) shows the change in the accelerator operation amount over time, and Fig. 18(B) shows the change in the steering operation amount over time. Fig. 18(C) shows the change in the torque (Ti) generated by the first dynamo-electric machine 210 and the torque ($T_2$) generated by the second dynamo-electric machine 220 over time. Fig. 18(D) shows the change in ΔR, which is one-half of the differential rotation speed, over time. Fig. 18(E) shows the change in the average rotation speed $R_b$ over time. The change in the first rotation speed $R_{b1}$ and the second rotation speed $R_{b2}$ over time are also shown together in the same diagram. Fig. 18(F) shows the change in the yaw rate $Y_b$ over time.

In the example of Fig. 18, at a time point t20, an operation that increases the accelerator operation amount from 0 has been performed. Then, at a time point t21, an operation that increases the steering operation amount from 0, that is, an operation for turning the vehicle 10 toward the right side, has been performed. Up to the time point t21, the change in each parameter over time is generally the same as in the example of Fig. 17 described above. The accelerator operation amount and the steering operation amount are returned to 0 at a time point t22.

As shown in Fig. 18C, after the time point t21, the torque generated in each of the first dynamo-electric machine 210 and the second dynamo-electric machine 220 is temporarily in the negative direction. This is because the basic rotation speed $R_a$ has decreased with the increase in the steering operation amount (see Fig. 7), and it has become necessary to decelerate the vehicle 10. After deceleration of the vehicle 10 has been completed, the torque (Ti) generated by the first dynamo-electric machine 210 is set to a larger torque than the torque ($T_2$) generated by the second dynamo-electric machine 220 such that the vehicle 10 makes a right turn according to the steering operation amount.

At this time, the measured yaw rate $Y_b$ becomes a positive value, and a feedback control is performed based on the value. As a result, the differential rotation speed ($2 \times$ ΔR) is appropriately set, and accordingly, each of $T_1$ and $T_2$ in Fig. 18(C) are also appropriately set. As a result, the travel stability of the vehicle 10 during a turning operation is also ensured by the control performed by the control device 100.

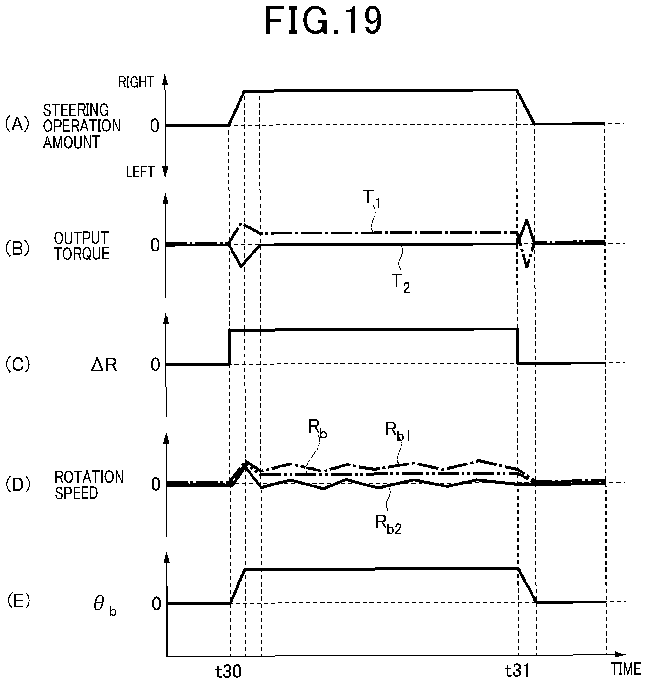

Yet another operation example will be described. Fig. 19(A) shows the change in the steering operation amount over time. Fig. 19(B) shows the change in the torque (Ti) generated by the first dynamo-electric machine 210 and the torque ($T_2$) generated by the second dynamo-electric machine 220 over time. Fig. 19(C) shows the change in ΔR, which is one-half of the differential rotation speed, over time. Fig. 19(D) shows the change in the average rotation speed $R_b$ over time. The change in the first rotation speed $R_{b1}$ and the second rotation speed $R_{b2}$ over time are also shown together in the same diagram. Fig. 19(E) shows the change in the steering angle $\theta_b$, which is the average value of the steering angle $\theta_1$ and the steering angle $\theta_2$, over time.

In the example of Fig. 19, at a time point t30, an operation that increases the steering operation amount from 0, that is, an operation for turning the vehicle 10 toward the right side, has been performed. Note that the accelerator operation amount (not shown) remains at 0. The steering operation amount is returned to 0 at a time point t31.

When such an operation is performed, the vehicle 10 turns on the spot toward the right direction while the vehicle speed remains approximately at 0. As shown in Fig. 19(B), after the time point t30, the torque (Ti) generated by the first dynamo-electric machine 210 is set to a positive value, while the torque ($T_2$) generated by the second dynamo-electric machine 220 is set to 0. This is because the value of $R_2$, which is the target value of the second rotation speed $R_{b2}$, has been set to 0 in step S53 of Fig. 16. As a result, the vehicle 10 turns toward the right side around the second drive wheel 22 on the right side, whose rotation speed is set to 0.

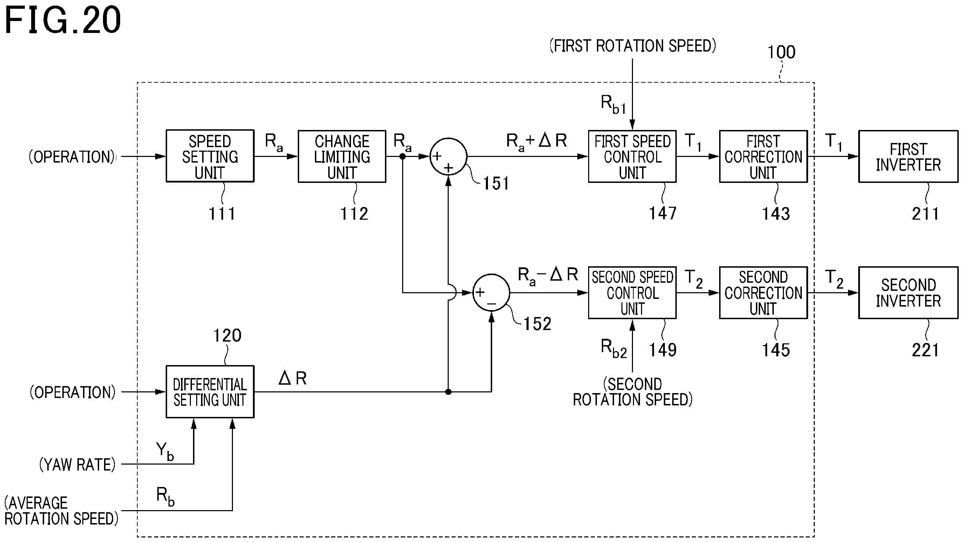

A second embodiment will be described with reference to Fig. 20. Fig. 20 shows the content of the control performed by the control device 100 according to the present embodiment as a block diagram in the same manner as Fig. 5. In the following, the aspects that are different from the first embodiment will be mainly described, and descriptions of the aspects that are common to the first embodiment will be omitted as appropriate.

In the present embodiment, in the adder 151, the ΔR set by the differential setting unit 120 is added to the basic rotation speed $R_a$ output from the change limiting unit 112. The value ($R_a$ + ΔR) obtained as a result is input to the first speed control unit 147. The first speed control unit 147 calculates Ti, which is the command value of the torque to be output from the first dynamo-electric machine 210, such that the first rotation speed $R_{b1}$ is brought closer to ($R_a$ + ΔR) that is input as the command value for the first rotation speed $R_{b1}$, and outputs the value to the first correction unit 143. The processing performed by the first speed control unit 147 is the same as the processing in the first embodiment described referring to Fig. 15. Note that, when performing the processing, eRi is calculated using equation (11) below instead of equation (7).

$$eR_1 = (R_a + \Delta R) - R_{b1} \,...\, (11)$$

Furthermore, $T_1$ is calculated using equation (12) below instead of equation (8).

$$T_1 = K_{p4} \times eR_1 + K_{i4} \times \int eR_1 \,...\, (12)$$

In the first embodiment shown in FIG. 5, the value obtained by adding ΔR to the average rotation speed $R_b$, which is an "actual measurement value", is input to the first speed control unit 147 as the command value for the first rotation speed $R_{b1}$. In contrast, in the present embodiment, the value obtained by adding ΔR to the basic rotation speed $R_a$, which is a "target value", is input to the first speed control unit 147 as the command value for the first rotation speed $R_{b1}$. In this case, because ($R_a$ + ΔR) input to the first speed control unit 147 does not include any disturbance, the control can be more stably performed.

The same applies to the control of the second rotation speed $R_{b2}$. In the present embodiment, in the adder 152, the $\Delta R$ set by the differential setting unit 120 is subtracted from the basic rotation speed $R_a$ output from the change limiting unit 112. The value $(R_a - \Delta R)$ obtained as a result is input to the second speed control unit 149. The second speed control unit 149 calculates $T_2$, which is the command value of the torque to be output from the second dynamo-electric machine 220, such that the second rotation speed $R_{b2}$ is brought closer to $(R_a - \Delta R)$ that is input as the command value for the second rotation speed $R_{b2}$, and outputs the value to the second correction unit 145. The processing performed by the second speed control unit 149 is the same as the processing in the first embodiment described referring to Fig. 16. Note that, when performing this processing, $eR_2$ is calculated using equation (13) below instead of equation (9).

$$eR_2 = (R_a - \Delta R) - R_{b2} \ldots (13)$$

Furthermore, $T_2$ is calculated using equation (10) below instead of equation (14).

$$T_2 = K_{p5} \times eR_2 + K_{i5} \times \int eR_2 \ldots (14)$$

Even with the above configuration, the same effects as those described in the first embodiment can be achieved. Note that, in the first embodiment shown in FIG. 5, the value obtained by adding $\Delta R$ to the average rotation speed $R_b$, which is an "actual measurement value", is input to the second speed control unit 149 as the command value for the second rotation speed $R_{b2}$. In contrast, in the present embodiment, the value obtained by subtracting $\Delta R$ from the basic rotation speed $R_a$, which is a "target value", is input to the second speed control unit 149 as the command value for the second rotation speed $R_{b2}$. In this case, because $(R_a - \Delta R)$ input to the second speed control unit 149 does not include any disturbance, the control can be more stably performed.

In the first embodiment, feedback control was performed in each of three blocks, namely the speed control unit 141, the first speed control unit 147, and the second speed control unit 149. In contrast, in the present embodiment, feedback control is performed in only two blocks, namely the first speed control unit 147 and the second speed control unit 149. As a result of reducing the number of feedback loops, control can be more simply and stably performed.

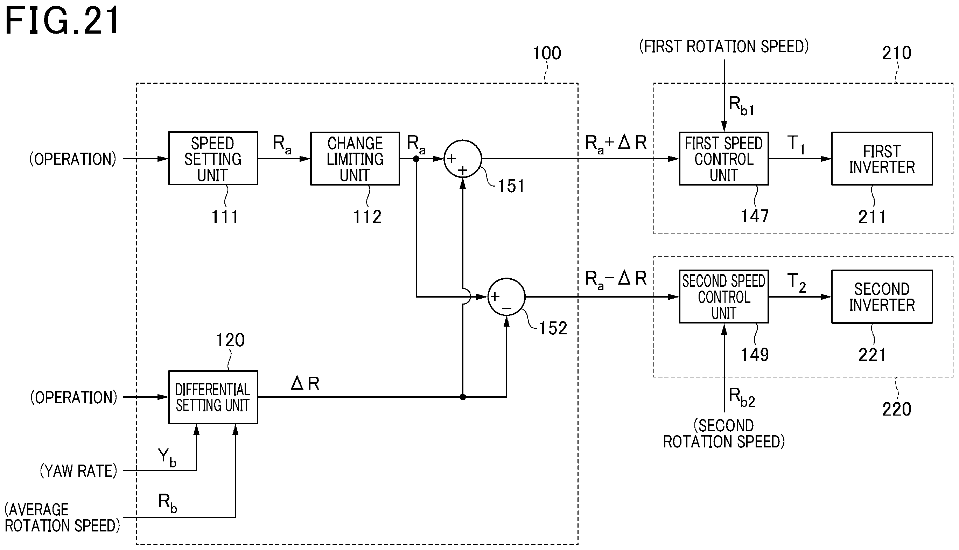

A third embodiment will be described with reference to Fig. 21. Fig. 21 shows the content of the control performed by the control device 100 according to the present embodiment as a block diagram in the same manner as Figs. 5 and 20. In the following, the aspects that are different from the second embodiment will be mainly described, and descriptions of the aspects that are common to the second embodiment will be omitted as appropriate.

In this embodiment, some of the functions of the control device 100 are built into the first dynamo-electric machine 210 and the second dynamo-electric machine 220. Specifically, the first speed control unit 147 is built into the first dynamo-electric machine 210, and the second speed control unit 149 is built into the second dynamo-electric machine 220. In other words, the first speed control unit 147 is a portion of an ECU (not shown) provided in the first dynamo-electric machine 210, and the second speed control unit 149 is provided is a portion of an ECU (not shown) provided in the second dynamo-electric machine 220.

The first speed control unit 147 and the first inverter 211 can be referred to as a mechanism that receives the first command value $(R_a + \Delta R)$, being a command value for the first rotation speed $R_{b1}$, from the control device 100, and adjusts the current supplied to the first dynamo-electric machine 210 based on the first command value. Such a first speed control unit 147 and first inverter 211 can be referred to as a "first adjustment mechanism" according to the present embodiment. The first adjustment mechanism is provided with the first dynamo-electric machine 210 in the wheel of the first drive wheel 21.

The second speed control unit 149 and the second inverter 221 can be referred to as a mechanism that receives the second command value $(R_a - \Delta R)$, being a command value for the second rotation speed $R_{b2}$, from the control device 100, and adjusts the current supplied to the second dynamo-electric machine 220 based on the second command value. Such a second speed control unit 149 and second inverter 221 can be referred to as a "second adjustment mechanism" according to the present embodiment. The second adjustment mechanism is provided with the second dynamo-electric machine 220 in the wheel of the second drive wheel 22.

The configuration of the control device 100 can be further simplified by separating some of the functions from the control device 100 and providing the functions in first drive wheel 21 and the like. Even in such a mode, the same effects as those of the embodiments described above can be achieved.

The present embodiments have been described above with reference to specific examples. However, the present disclosure is not limited to these specific examples. As long as the features of the present disclosure are provided, the scope of the present disclosure includes specific examples in which design changes are made as necessary by those skilled in the art. The elements included in each of the specific examples described above, their arrangement, conditions, shapes, and the like, are not limited to those that have been illustrated, and can be modified as appropriate. The elements included in each of the specific examples described above can be appropriately combined as long as no technical contradiction occurs.

The control device and the control method described in the present disclosure may be realized by one or more dedicated computers provided with a configuration having a processor and a memory that have been programmed to execute one or more functions implemented by a computer program. The control device and the control method described in the present disclosure may be realized by a dedicated computer provided with a configuration having a processor including one or more dedicated hardware logic circuits. The control device and the control method described in the present disclosure may be realized by one or more dedicated computers configured by a combination of a processor and a memory that have been programmed to execute one or more functions, and one or more hardware logic circuits. The computer program may be stored as instructions executed by a computer on a computer-readable non-transitory tangible storage medium. The dedicated hardware logic circuits and hardware logic circuits may be realized by digital circuits that include multiple logic circuits, or by analog circuits.

**Claims**

1. A moving body comprising:

   a first drive wheel (21) disposed on a left side;
   a first dynamo-electric machine (210) that imparts torque to the first drive wheel;
   a second drive wheel (22) disposed on a right side;
   a second dynamo-electric machine (220) that imparts torque to the second drive wheel;
   driven wheels (31, 32) that rotate due to a reaction force from a road surface, and which change a steering angle due to a reaction force from a road surface;
   a first rotation speed acquisition unit (212) that acquires a first rotation speed, being the number of rotations the first drive wheel makes per unit time;
   a second rotation speed acquisition unit (222) that acquires a second rotation speed, being the number of rotations the second drive wheel makes per unit time; and
   a control device (100) that controls an operation of the first dynamo-electric machine and the second dynamo-electric machine; wherein
   the control device comprises
   a basic setting unit (110) that sets a basic rotation speed, being a target value for an average value of the first rotation speed and the second rotation speed,
   a differential setting unit (120) that sets a differential rotation speed, being a target value for a difference between the first rotation speed and the second rotation speed, and
an action control unit (130) that controls an operation of the first dynamo-electric machine and the second dynamo-electric machine such that an average value of the first rotation speed and the second rotation speed becomes the basic rotation speed, and a difference between the first rotation speed and the second rotation speed becomes the differential rotation speed.

2. The moving body according to claim 1, further comprising

   an operation unit (70), which is a part in which an operation by a user is performed, wherein setting of the basic rotation speed by the basic setting unit, and setting of the differential rotation speed by the differential setting unit are performed based on an operation performed with respect to the operation unit.

3. The moving body according to claim 1 or 2, wherein the basic setting unit sets the basic rotation speed within a predetermined first range.

4. The moving body according to any one of claims 1 to 3, wherein
   the basic setting unit changes the basic rotation speed such that an amount of change per unit time is within a predetermined second range.

5. The moving body according to any one of claims 1 to 4, further comprising

   a yaw rate sensor (60) that measures a yaw rate, wherein
   the control device further comprises
   a yaw rate setting unit that sets a target yaw rate, which is a target value for the yaw rate, and
   the differential setting unit
   sets the differential rotation speed based on a difference between the target yaw rate and an actual yaw rate that has been measured by the yaw rate sensor.

6. The moving body according to any one of claims 1 to 5, further comprising

   a first adjustment mechanism (147, 211) that receives a first command value, being a command value for the first rotation speed, and adjusts a current supplied to the first dynamo-electric machine based on the first command value, and
   a second adjustment mechanism (149, 221) that receives a second command value, being a command value for the second rotation speed, and adjusts a current supplied to the second dynamo-electric machine based on the second command value, wherein

the first adjustment mechanism is provided with the first dynamo-electric machine in a wheel of the first drive wheel, and

the second adjustment mechanism is provided with the second dynamo-electric machine in a wheel of the second drive wheel.

7. A control device of a moving body, the moving body provided with

a first drive wheel disposed on a left side,

a first dynamo-electric machine that imparts torque to the first drive wheel,

a second drive wheel disposed on a right side,

a second dynamo-electric machine that imparts torque to the second drive wheel,

driven wheels that rotate due to a reaction force from a road surface, and which change a steering angle due to a reaction force from a road surface,

a first rotation speed acquisition unit that acquires a first rotation speed, being the number of rotations the first drive wheel makes per unit time, and

a second rotation speed acquisition unit that acquires a second rotation speed, being the number of rotations the second drive wheel makes per unit time,

the control device comprising:

a basic setting unit that sets a basic rotation speed, being a target value for an average value of the first rotation speed and the second rotation speed;

a differential setting unit that sets a differential rotation speed, being a target value for a difference between the first rotation speed and the second rotation speed; and

an action control unit that controls an operation of the first dynamo-electric machine and the second dynamo-electric machine such that an average value of the first rotation speed and the second rotation speed becomes the basic rotation speed, and a difference between the first rotation speed and the second rotation speed becomes the differential rotation speed.

8. A program for a moving body, the moving body provided with

a first drive wheel disposed on a left side,

a first dynamo-electric machine that imparts torque to the first drive wheel,

a second drive wheel disposed on a right side,

a second dynamo-electric machine that imparts torque to the second drive wheel,

driven wheels that rotate due to a reaction force from a road surface, and which change a steering angle due to a reaction force from a road surface,

a first rotation speed acquisition unit that acquires a first rotation speed, being the number of rotations the first drive wheel makes per unit time,

a second rotation speed acquisition unit that acquires a second rotation speed, being the number of rotations the second drive wheel makes per unit time, and

a control device that controls an operation of the first dynamo-electric machine and the second dynamo-electric machine;

the program causing the control device to perform the steps of:

setting a basic rotation speed, being a target value for an average value of the first rotation speed and the second rotation speed;

setting a differential rotation speed, being a target value for a difference between the first rotation speed and the second rotation speed; and

controlling an operation of the first dynamo-electric machine and the second dynamo-electric machine such that an average value of the first rotation speed and the second rotation speed becomes the basic rotation speed, and a difference between the first rotation speed and the second rotation speed becomes the differential rotation speed.

# FIG.1

# FIG.2

311(321)

11

315(325)

TRAVEL DIRECTION

31(32)

312(322)

# FIG.3

# FIG.4

EP 4 410 588 A1

# FIG.5

(AVERAGE ROTATION SPEED)

100

$R_b$

(OPERATION) → SPEED SETTING UNIT $R_a$ → CHANGE LIMITING UNIT $R_a$ → SPEED CONTROL UNIT $T_a$ → (+)(+) $T_a + \Delta T_1$ → FIRST CORRECTION UNIT $T_1$ → FIRST INVERTER

111    112    141    142    143    211

$T_a + \Delta T_2$ → SECOND CORRECTION UNIT $T_2$ → SECOND INVERTER

(FIRST ROTATION SPEED)    144    145    221

$R_{b1}$

120

(OPERATION) → DIFFERENTIAL SETTING UNIT $\Delta R$ → (+)(+) $R_b + \Delta R$ → FIRST SPEED CONTROL UNIT $\Delta T_1$

(YAW RATE) $Y_b$    146    147

(AVERAGE ROTATION SPEED) $R_b$

$R_b - \Delta R$ → SECOND SPEED CONTROL UNIT $\Delta T_2$

148    149

$R_b$    $R_{b2}$

(AVERAGE ROTATION SPEED)    (SECOND ROTATION SPEED)

EP 4 410 588 A1

# FIG.6

START

S01
$R_b = 0$? — No

Yes

S02
R INSTRUCTION ? — Yes

No

S03
D INSTRUCTION ? — Yes

No

S04
FL=R

S05
FL=D

S06
FL=D? — No

Yes

S08
FL=R? — No

Yes

S07
Ra = MAP REFERENCE VALUE

S09
Ra = −1 x MAP REFERENCE VALUE

RETURN

FIG.7

# FIG.8

```
                    ┌─────────────┐
                    │    START    │
                    └──────┬──────┘
                           │
                           ▼            S11
                    ╱───────────────╲
              ╱────╱  Rₐ(i) = Rₐ(i-1) ≤ ╲────╲  NO
                  ╲  UPPER LIMIT VALUE ? ╱
                    ╲───────────────╱
                           │ YES
```

$R_a(i) = R_a(i-1) \leq$ UPPER LIMIT VALUE ?  —S11  NO

YES

$R_a(i) = R_a(i-1) +$ UPPER LIMIT VALUE  —S14

$R_a(i) = R_a(i-1) \geq$ LOWER LIMIT VALUE ?  —S12  NO

YES

$R_a(i) = R_a(i-1) +$ LOWER LIMIT VALUE  —S15

$R_a = R_a(i)$  —S13

RETURN

# FIG.9

# FIG.10

START

S21

$R_b \geq 3km/h$ ?　　　　NO

YES

S30

NO　　STEERING OPERATION AMOUNT $\geq$ PREDETERMINED VALUE ?

YES

S22　SET $\triangle R_0$

S31　SET $\triangle R_0$

S23　SET $Y_a$

S32　SET $\theta_a$

S24　SET $\triangle R_1$

S33　SET $\triangle R_1$

S25　ADJUST $\triangle R_1$

S34　ADJUST $\triangle R_1$

S26　$\triangle R = \triangle R_0 + \triangle R_1$

S27

D RANGE ?　　　NO

YES

S28

R RANGE ?　　　NO

YES

S29　$\triangle R = -1 \times \triangle R$

RETURN

# FIG.11

# FIG.12

# FIG.13

# FIG.14

$\theta_a$

$R_b$: SMALL

$R_b$: LARGE

L51

L52

0

STEERING OPERATION AMOUNT

$R_b$: LARGE

L52

L51

$R_b$: SMALL

# FIG.15

START

$R_1 = R_b + \Delta R$ ⟩ S41

S42

$R_1 \geq 0$ ? — No → $R_1 = 0$ ⟩ S43

Yes

CALCULATE $\Delta T_1$ ⟩ S44

ADJUST $\Delta T_1$ ⟩ S45

RETURN

# FIG.16

START

$R_2 = R_b - \Delta R$ ~S51

S52

$R_2 \geq 0$ ?

No

S53

$R_2 = 0$

Yes

CALCULATE $\Delta T_2$ ~S54

ADJUST $\Delta T_2$ ~S55

RETURN

# FIG.17

# FIG.18

# FIG.19

# FIG.20

# FIG.21

## INTERNATIONAL SEARCH REPORT

| | |
|---|---|
| International application No. | |
| | **PCT/JP2022/035238** |

**A. CLASSIFICATION OF SUBJECT MATTER**

***B60L 15/20*** (2006.01)i
FI: B60L15/20 S

According to International Patent Classification (IPC) or to both national classification and IPC

**B. FIELDS SEARCHED**

Minimum documentation searched (classification system followed by classification symbols)

B60L15/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-192471 A (NISSAN MOTOR CO., LTD.) 02 November 2015 (2015-11-02) paragraphs [0001]-[0004], [0010]-[0105] | 1-8 |
| A | JP 2005-184971 A (NISSAN MOTOR CO., LTD.) 07 July 2005 (2005-07-07) paragraph [0001] | 1-8 |
| A | JP 48-044914 A (HITACHI, LTD.) 27 June 1973 (1973-06-27) entire text, all drawings | 1-8 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 December 2022** | **13 December 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

INTERNATIONAL SEARCH REPORT
Information on patent family members

International application No.

**PCT/JP2022/035238**

| Patent document cited in search report | | | Publication date (day/month/year) | Patent family member(s) | Publication date (day/month/year) |
|---|---|---|---|---|---|
| JP | 2015-192471 | A | 02 November 2015 | (Family: none) | |
| JP | 2005-184971 | A | 07 July 2005 | (Family: none) | |
| JP | 48-044914 | A | 27 June 1973 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021157624 A

- JP 2006341656 A